# EUROPÄISCHE PATENTSCHRIFT

(11) **EP 1 687 557 B1**
(45) Veröffentlichungstag und Bekanntmachung des Hinweises auf die Patenterteilung: **24.08.2011**
(21) Anmeldenummer: 05807960.9
(22) Anmeldetag: 08.11.2005
(51) Int. Cl.: F16L 37/088, F16J 15/06, F16J 15/02

(54) **VERBINDUNGSSYSTEM**
CONNECTING SYSTEM
SYSTEME D'ASSEMBLAGE

(30) Priorität: 09.11.2004 DE 4017316 U
(43) Veröffentlichungstag der Anmeldung: 09.08.2006
(73) Patentinhaber: Voss Automotive GmbH, 51688 Wipperfürth (DE)
(72) Erfinder: WESTMEIER, Jörg, 51688 Wipperfürth (DE); TERLAU, Norbert, 51515 Kürten (DE); MITTERER, Reiner, 51688 Wipperfürth (DE); HAGEN, Harald, 51688 Wipperfürth (DE)
(74) Vertreter: Patentanwälte Dr. Solf & Zapf
(86) Internationale Anmeldenummer: PCT/EP2005/055819
(87) Internationale Veröffentlichungsnummer: WO 2006/051071

(56) Entgegenhaltungen:
- EP-A- 1 164 317
- DE-U1- 20 314 133
- US-A- 3 366 392
- US-A- 4 078 813
- US-A- 6 027 144

## Beschreibung

Die vorliegende Erfindung betrifft ein Verbindungssystem für Leitungen, Armaturen oder Aggregate, die zur Führung eines mit einem gegenüber einem Vergleichsdruck erhöhten Druck beaufschlagten Fluids bestimmt sind, insbesondere für Kohlendioxid führende Systeme, umfassend ein erstes Kupplungsteil, wie ein Gehäuseteil, ein entlang einer Achse in eine Aufnahmeöffnung des ersten Kupplungsteils mit einem Schaft einsteckbares zweites Kupplungsteil, wie ein Steckerteil, und mindestens eine aus einem Elastomer bestehende Umfangsdichtung, die in einer Nut angeordnet ist, welche umfangsgemäß in einem der beiden Kupplungsteile ausgebildet ist und einen Nutgrund sowie zwei Nutflanken aufweist, wobei die Umfangsdichtung im Betriebszustand in der Nut eine Position einnimmt, in der die Umfangsdichtung unter Deformation und Erzeugung einer radialen Vorpresskaft einen Spalt der Aufnahmeöffnung verschließt und dabei über eine in axialer Richtung verlaufende Kontaktlänge an den Kupplungsteilen anliegt.

Das Erfordernis einer Abdichtung entsteht überall dort, wo Räume mit unterschiedlichen Drücken voneinander getrennt werden müssen. Durch die Druckdifferenz entsteht bei einem Verbindungssystem der vorstehend beschriebenen Art in dem Spalt zwischen den Kupplungsteilen eine Strömung, die durch die Verwendung der Umfangsdichtung unterbunden werden soll. Für solche Dichtungen werden in der Fluidtechnik überwiegend elastomere Werkstoffe, z. B. in Form von O-Ringen, eingesetzt. Voraussetzung für die Erzielung der Dichtwirkung ist dabei das Vorhandensein einer Vorpresskraft bzw. Vorspannung gegen die abzudichtenden Flächen, die unter Ausnutzung der Formelastizität der Dichtung bei ihrem Einbau erzeugt wird.

Ein System, das zur Führung eines mit einem Druck beaufschlagten Fluids bestimmt ist, stellt in Kraftfahrzeugen beispielsweise der Kühlkreislauf von Klimaanlagen dar. In einem solchen System werden bisher verschiedene Halogen-Kohlenwasserstoff Verbindungen, wie ein unter dem Namen R134a bekanntes, hauptsächlich aus Tetrafluoräthan bestehendes Kältemittel, eingesetzt. Da alle organischen Stoffe gasdurchlässig sind, kommt es trotz Einsatz der Dichtungen - hauptsächlich infolge von Permeation durch die Umfangsdichtung - zu einem unvermeidbaren Fluidstrom des Kältemittels vom Raum des höheren in den Raum des niedrigeren Drucks. Die Leckmenge aufgrund von Permeation wird dabei durch die Betriebsbedingungen, wie Druck und Temperatur, die Permeabilität der eingesetzten Elastomerdichtungen und die Dichtungsgeometrie bestimmt.

Eine Menge des infolge von Permeation durch die Umfangsdichtung durchgesetzten Fluids wird dabei von der Permeationskonstante des Dichtungsmaterials, der dem Dichtungsvorgang zu Grunde gelegten Zeit, z.B. einem Jahr, dem abzudichtenden Druck und einem Verhältnis der Querschnittsfläche der deformierten Umfangsdichtung zu einer Permeationslänge durch die Dichtung bestimmt, wobei letztere durch die axiale Längserstreckung der deformierten Dichtung zwischen den beiden Kupplungsteilen festgelegt wird. Ausgehend von diesen Gegebenheiten ergibt sich bei vorgegebenem Systemdruck und vorgegebener Betriebsdauer, dass zur Erzielung einer geringen Leckmenge die Querschnittsfläche der deformierten Umfangsdichtung möglichst klein und die mittlere Permeationslänge möglichst groß gewählt werden sollte. In der Praxis sind einer derartigen Dimensionierung jedoch Grenzen gesetzt, da die genannten Forderungen im Gegensatz zu Forderungen stehen, die sich daraus ergeben, dass eine Dichtung zur Gewährleistung der grundsätzlichen Funktionstauglichkeit eines Verbindungssystems auch einem Ausgleich von Fertigungstoleranzen der zu verbindenden Teile dienen muss. Bei einem Einsatz von Kohlendioxid als Kältemittel in einer Klimaanlage ist ein Übergang zu, im Vergleich mit den für halogenhaltigen Kältemittel üblichen Drücken, erhöhten Drücken und Temperaturen bei den Wärmeaustauschprozessen erforderlich. So ist für den im Betrieb einer CO₂-Klimaanlage auftretenden Druck ein oberes Niveau von etwa 160 bar und ein unteres Niveau von etwa 35 bar charakteristisch, wodurch sich die aufgezeigte Problematik der Abdichtung noch verschärft.

In der europäischen Patentanmeldung EP 1 469 247 A9 bzw. aus der DE 203 14 133 U1 ist zur Lösung der vorstehend aufgezeigten Problematik ein Verbindungssystem der eingangs genannten Art beschrieben, bei der der Querschnitt der unverpressten Umfangsdichtung, eine Tiefe der Nut und die Spaltweite derart aufeinander abgestimmt sind, dass ein Verhältnis einer senkrecht zur axialen Richtung verlaufenden Querschnittsfläche der deformierten Umfangsdichtung zu der Kontaktlänge in einem Bereich liegt, in dem eine Menge des infolge von Permeation durch die Umfangsdichtung durchgesetzten Fluids in einem mit Fluid gesättigten Zustand der Umfangsdichtung eine nichtlineare Abhängigkeit von diesem Verhältnis zeigt.

Dieses Verbindungssystem hat sich in der Praxis bewährt, so dass eine auf Dauer permeationsarme Kupplungs-Verbindung, z. B. für CO₂-führende Systeme, geschaffen werden konnte. Für die aus der europäischen Patentanmeldung EP 1 469 247 A9 bekannte konstruktive Gestaltung der Steckkupplung ist dabei in besonders permeationsminimierender Weise ein kleines Verhältnis der senkrecht zur axialen Richtung verlaufenden Querschnittsfläche der deformierten Umfangsdichtung zu der Kontaktlänge und eine bevorzugte Verpressung der Dichtung von mehr als 30 Prozent, insbesondere von mehr als 50 Prozent, charakteristisch.

Aus dieser Merkmalskombination, die bei herkömmlich dimensionierten Verbindungssystemen nicht vorliegt, entsteht neben der vorteilhaft geringen Permeation aber ein mit dem viskoelastischen Verhalten der Umfangsdichtung verbundenes Problem. So ist als eine nachteilig auf das Verbindungssystem wirkende Begleiterscheinung festzustellen, dass Faktoren, wie eine durch Aufbringen einer starken Anpresskraft große Verpressung und die Ausbildung einer großen Kontaktlänge, über die Zeit zu einem Ansteigen des Reibwiderstandes führen können. Insbesondere die Kombination der genannten Parameter kann zu einem übermäßig starken Anstieg der Haftreibungskraft bis hin zu einem "Verkleben" der Umfangsdichtung, insbesondere an ihrem Außendurchmesser, führen. Durch dieses "Verkleben" wird bewirkt, dass sogar ein hoher Systemdruck die Umfangsdichtung nicht mehr axial in der Nut verschieben kann, so dass sie nach der Montage durch den bei Aufnahme der Betriebsbedingungen eintretenden Fluiddruck nicht mehr an einer Flanke der Nut zur Anlage gebracht werden kann. Dies hat wiederum nachteiligerweise zur Folge, dass eine unbeabsichtigt große Permeationsaustrittsfläche entsteht und die Permeation anwächst.

Im Detail besteht dabei folgende Problematik: Beim Zusammenstecken der Kupplungsteile eines Systems der eingangs genannten Art muss aus Toleranzgründen ein an einem der beiden Kupplungsteile befindliches Halteelement mit Spiel in eine am anderen Kupplungsteil befindliche korrespondierende Kontur einrasten. Dadurch hat das Stecksystem üblicherweise ein axiales Spiel und wird beim Stecken des Steckerteils minimal übersteckt. Durch ein anschließendes Zurückziehen bzw. -schieben eines der beiden Kupplungsteile zur Steckkontrolle oder bei einer späteren Beaufschlagung mit Systemdruck werden die Kupplungsteile wieder auseinander gedrückt, bis das Halteelement zur Anlage kommt. Wünschenswertervveise sollte sich bei dieser Bewegung auch die Umfangsdichtung mitbewegen. In besonderem Maße dann, wenn die Umfangsdichtung wegen einer jeweils großen Anpresskraft und Kontaktlänge nach relativ kurzer Zeit mit den Anlageflächen der Kupplungsteile, insbesondere an ihrem Außenumfang mit einem Innenumfang des als Gehäuseteils ausgebildeten Kupplungsteils, aufgrund eines Anstiegs der Haftreibungszahl "verklebt", geschieht dies jedoch nicht und die auf der permeationsbestimmenden Seite befindliche Anlagefläche der Umfangsdichtung wird von der Nutflanke, an der sie im Betriebszustand anliegen sollte, in axialer Richtung weggedrängt, wodurch - wie erwähnt - im Zwischenraum zwischen Anlagefläche der Umfangsdichtung und korrespondierender Nutflanke eine unerwünscht große Permeationsaustrittsfläche entsteht. Die Umfangsdichtung kann dann selbst bei einer späteren Beaufschlagung mit einem Systemdruck, der von seiner axialen Wirkungsrichtung her geeignet wäre, die Dichtung an die Nutflanke zu drücken, nicht mehr verschoben und zur Anlage gebracht werden. Dabei ist für ein Verbindungssystem der eingangs genannten Art die Zeitspanne zwischen dem eigentlichen Stecken bis zur Beaufschlagung mit Spitzendruck als entscheidender Zeitraum anzusehen. Dieser Zeitraum kann sich von mehreren Stunden bis zu wenigen Tagen erstrecken.

Es sind grundsätzlich verschiedene, auf bei Umfangsdichtungen, z.B. bei O-Ringen, wirkende Faktoren bekannt, durch die Einfluß auf die tribologischen Verhältnisse, wie sie im vorliegenden Fall auftreten, genommen werden kann. Bei genauerer Betrachtung dieser Faktoren zeigt sich jedoch, dass - insbesondere, wenn die permeationsarme Verbindung der Kupplungsteile als unabdingbare Voraussetzung gewährleistet werden muß - diese die Reibung beeinflussenden Faktoren gar nicht oder nur so gering veränderbar sind, dass dem vorstehend geschilderten Problem nicht abgeholfen werden kann.

Der vorliegenden Erfindung liegt die Aufgabe zu Grunde, ein Verbindungssystem der eingangs genannten Art zu schaffen, das bei Gewährleistung einer geringen Menge des durch die Umfangsdichtung durchgesetzten Fluids im Betriobszustand eine hohe Funktionssicherheit sowie bei der Herstellung der Kupplungsverbindung eine erhöhte Montagefreundlichkeit besitzt.

Erfindungsgemäß wird dies durch ein verbindungssystem mit den merkmalen der Ansprüche 1 oder 9 erreicht. Hierbei ist vorgesehen dass in der Nut Mittel zur mechanischen Hemmung einer axialen Bewegung der Umfangsdichtung angeordnet sind, die derart ausgeführt sind, dass die Umfangsdichtung - sowohl, wenn das eine Kupplungsteil mit dem Schaft in die Aufnahmeöffnung des anderen Kupplungsteiles eingesteckt wird, als auch bei einer entgegengesetzt wirkenden relativen Rückbewegung der Kupplungsteile zueinander in der Position gehalten ist, in der die Umfangsdichtung im Betriebszustand den Spalt der Aufnahmeöffnung verschließt und dabei mit einer axial gerichteten Anlagefläche an einer auf der Seite des abzudichtenden Spaltes liegenden Nutflanke anliegt.

Erfindungsgemäß können durch diese mechanische Fixierung die Eigenspannungen, die durch die Deformation beim Einstecken und die Erzeugung der radialen Vorpresskaft in der Umfangsdichtung entstanden sind, derart erhöht werden, dass sie zu einer dauerhaften Anlage der Umfangsdichtung an der Nutflanke auf der abzudichtenden Seite des Spaltes führen.

Beim Zusammenstecken der Kupplungstelle eines erfindungsgemäßen Systems kann also - wie eingangs beschrieben - eine Verrastung der beiden Kupptungstelle erfolgen, bei der das Stecksystem das üblicherweise erforderliche axiale Spiel hat, wobei auch beim Stecken des Steckerteils dieses minimal übersteckt werden kann. Wenn dann bei einem anschließenden Zurückziehen bzw. -schieben eines der beiden Kupplungsteile zur Steckkontrolle oder bei einer späteren Beaufschlagung mit Systemdruck die Kupplungsteile wieder auseinander gedrückt werden, wird bei dieser Bewegung auch die Umfangsdichtung mitbewegt. Durch das Vorhandensein der in der Nut vorgesehenen Mittel zur mechanischen Hemmung der axialen Bewegung der Umfangsdichtung wird dabei - auch dann, wenn die Umfangsdichtung mit großer Anpresskraft und Kontaktlänge insbesondere am Innenumfang des als Gehäuseteils ausgebildeten Kupplungsteils anliegt - die Umfangsdichtung nicht von der Nutflanke, an der sie im Betriebszustand bestimmungsgemäß anliegen soll, weggedrängt. Dadurch kann vorteilhafterweise keine unerwünscht vergrößerte Permeationsfläche entstehen. Die Rückbewegung nach dem Stecken kann dabei problemlos in der eingangs erwähnten kritischen Zeit von mehreren Stunden bis zu wenigen Tagen erfolgen. Die Mittel zur mechanischen Hemmung der axialen Bewegung der Umfangsdichtung müssen dabei nicht derart ausgelegt sein, dass sie die Umfangsdichtung im Sinne einer starren Halterung an ihrem Platz fixieren. Es genügt, wenn die die Axialbewegung der Umfangsdichtung hemmende Kraft größer ist als die sich nach dem Aufbringen der Anpresskraft aufgrund der viskoelastischen Eigenschaften der Umfangsdichtung im kritischen Zeitraum einstellende Resultierende der Haftreibungskraft, insbesondere die Differenz der Haftreibungskräfte am Innen- und am Außendurchmesser.

Eine im Nutgrund ausgebildete ebene oder gekrümmte, insbesondere konvex gekrümmte in Richtung des axialen Einsteckens des einen Kupplungsteils in die Aufnahmeöffnung des anderen Kupplungsteiles radial nach außen verlaufende Schrägfläche als Mittel zur Hemmung der Relativbewegung zwischen Umfangsdichtung und Nutflanke ist als Mittel zur mechanischen Hemmung der axialen Bewegung der Umfangsdichtung vorgesehen. So ist es zum Beispiel in konstruktiv wenig aufwändiger Weise möglich, dass diese Mittel derart ausgebildet sind, dass sie in Richtung des axialen Einsteckens des einen Kupplungsteils in die Aufnahmeöffnung des anderen Kupplungsteiles im Längsschnitt gesehen in radialer Richtung eine sprungartige und/oder stetige Verringerung des Querschnitts der Nut bewirken. Dies kann beispielsweise dadurch erreicht werden, dass die Mittel zur mechanischen Hemmung der axialen Bewegung der Umfangsdichtung eine im Nutgrund angeordnete umfangsgemäß verlaufende Unstetigkeitsstelle, wie eine Knicklinie oder eine Kante, umfassen.

Weitere vorteilhafte Ausgestaltungsmerkmale der Erfindung sind in den Unteransprüchen sowie der folgenden Beschreibung enthalten.

Anhand mehrerer bevorzugter Ausführungsbeispiele soll im Folgenden die Erfindung näher erläutert werden. Dabei zeigen:
- Fig. 1: im Längsschnitt, vergrößert, eine Darstellung eines Verbindungssystems, in dem die Erfindung bevorzugt zur Anwendung gelangt,
- Fig. 1a: teilgeschnitten, im Maßstab 1 : 1, ein zweites Kupplungsteil eines Verbin- dungssystems, in dem die Erfindung bevorzugt zur Anwendung gelangt,
- Fig. 2: im Längsschnitt, eine Teildarstellung eines erfindungsgemäßen Ver- bindungssystems in einer ersten Ausführung,
- Fig. 3: eine diagrammatische Darstellung der Abhängigkeit der Haftreibungszahl in einer aus einer Umfangsdichtung und einem Kupplungsteil gebildeten Reibpaarung von der Zeit,
- Fig. 4a: im Längsschnitt, eine Teildarstellung eines erfindungsgemäßen Ver- bindungssystems zur Veranschaulichung des Nutfüllungsgrades bei Raumtemperatur,
- Fig.4b: im Längsschnitt, eine Teildarstellung eines erfindungsgemäßen Ver- bindungssystems zur Veranschaulichung des Nutfüllungsgrades bei ge- genüber der Raumtemperatur erhöhter Temperatur,
- Fig. 5: im Längsschnitt, eine Teildarstellung eines erfindungsgemäßen Ver- bindungssystems in einer zweiten Ausführung,
- Fig. 6: im Längsschnitt, eine Teildarstellung eines erfindungsgemäßen Ver- bindungssystems in einer dritten Ausführung,
- Fig. 7: im Längsschnitt, stark vergrößern, eine Teildarstellung eines zweiten Kupplungsteiles eines erfindungsgemäßen Verbindungssystems gemäß der dritten Ausführung, mit einigen geometrischen Detailveränderungen gegenüber Fig. 6,
- Fig. 8: in geschnittener perspektivischer Darstellung, eine bevorzugte Ausfüh- rungsform einer Umfangsdichtung für ein erfindungsgemäßes Ver- bindungssystem,
- Fig.9: in Querschnittsdarstellung, eine weitere bevorzugte Ausführungsform einer Umfangsdichtung für ein erfindungsgemäßes Verbindungssystem,
- Fig. 10: im Längsschnitt, eine dritte bevorzugte Ausführungsform einer Umfangs- dichtung für ein erfindungsgemäßes Verbindungssystem,
- Fig. 11: im Längsschnitt, eine Teildarstellung eines erfindungsgemäßen Ver- bindungssystems in einer vierten Ausführung,
- Fig. 12: ein Schema einer Vorrichtung zur Bestimmung der Menge von infolge von Permeation durch eine Umfangsdichtung eines erfindungsgemäßen Verbindungssystems durchgesetzten Fluids.

In den verschiedenen Figuren der Zeichnung sind gleiche und einander entsprechende Teile stets mit den gleichen Bezugszeichen versehen und werden daher im Folgenden in der Regel jeweils nur einmal beschrieben.

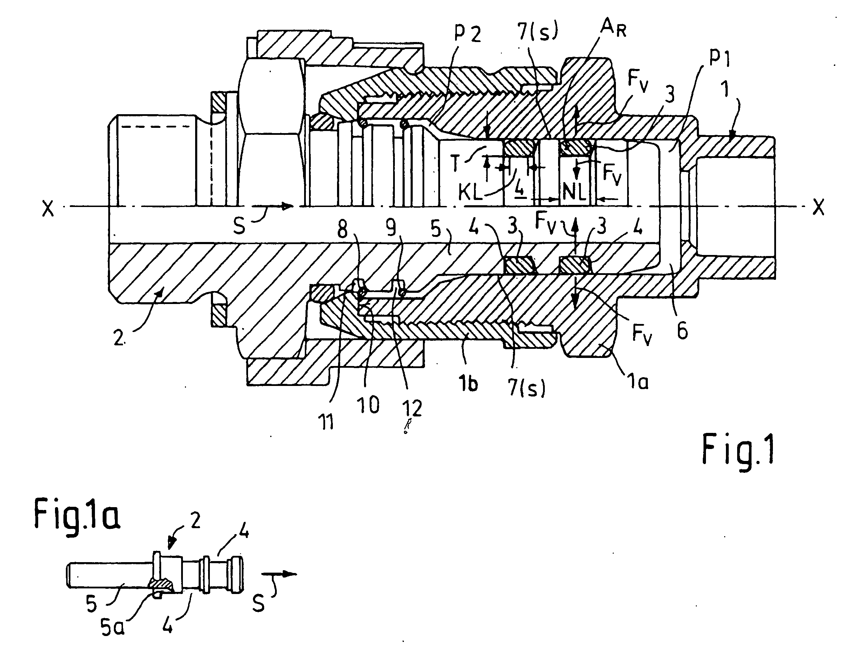

Wie sich zunächst aus Fig. 1 ergibt, umfasst ein Verbindungssystem für fluidische Systeme, insbesondere für CO₂ führende Systeme, im dargestellten Fall eine Steckkupplung, in dem die Erfindung bevorzugt zur Anwendung gelangen kann, ein erstes Kupplungsteil 1 in Form eines Gehäuses, ein entlang einer Achse X-X in das erste Kupplungsteil 1 einführbares zweites Kupplungsteil 2 in Form eines Steckerteiles, und mindestens eine, in der dargestellten Ausführung zwei, aus einem Elastomer bestehende Umfangsdichtungen 3. Die Umfangsdichtungen 3 sind jeweils in einer eine Nuttiefe T und eine Nutlänge NL aufweisenden Nut 4 angeordnet, welche um fangsgemäß in einem der beiden Kupplungsteile 1, 2 - in der dargestellten Ausführung im zweiten Kupplungsteil 2, dem Steckerteil - ausgebildet ist.

Wie auch die in natürlichem Maßstab gezeigte Darstellung in Fig. 1a zeigt, weist das zweite Kupplungsteil 2 einen in seiner Grundgestalt im Querschnitt runden Schaft 5 auf und ist damit in eine in ihrer Grundgestalt im Querschnitt runde Aufnahmeöffnung 6 des ersten Kupplungsteiles 1 einsteckbar. Die Steckrichtung wird durch den Pfeil mit dem Bezugszeichen S bezeichnet. Die Nuten 4 verlaufen im Mantel des Schaftes 5 umfangsgemäß und parallel zueinander. Der ausgebrochene Teil in Fig. 1a zeigt dabei, dass mit Vorteil in dem Schaft 5 eine, insbesondere eingefräste, Belüftungsnut 5a vorhanden sein kann.

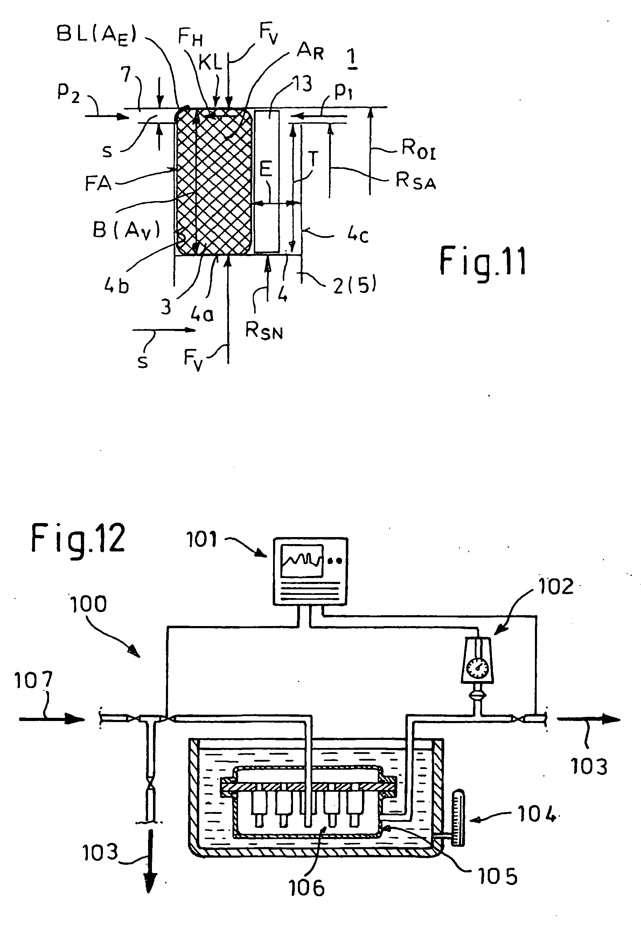

Die Umfangsdichtungen 3 verschließen nach dem Einstecken, insbesondere im Betriebszustand, unter Deformation und Erzeugung einer radialen Vorpresskaft Fᵥ jeweils einen Spalt 7 mit einer Spaltweite s, die in Fig. 1 nicht gut zu erkennen und daher dort nur mit einem in Klammem gesetzten Bezugszeichen "(s)" angedeutet ist. Eine deutlichere Darstellung zeigt Fig. 11. wo auch dargestellt ist, dass sich der Spalt 7 zwischen dem Außenradius R_{SA} des Schaftes 5 und dem Innenradius R_{OI}, der Aufnahmeöffnung 6 befindet. Die jeweilige Umfangsdichtung 3 verschließt den Spalt 7 und liegt dabei zumindest über eine senkrecht zum jeweiligen Radius R_{SA}, R_{OI} der Kupplungsteile 1, 2 in axialer Richtung X-X verlaufende - auch aus Fig. 1 hervorgehende - Kontaktlänge KL an den Kupplungsteilen 1, 2 an.

Wie wiederum durch Fig. 11 veranschaulicht ist, ergibt sich eine Breite B der senkrecht zur axialen Richtung X-X verlaufenden Querschnittsfläche Av der deformierten Umfangsdichtung 3 dabei aus der Summe aus Nuttiefe T und Spaltweite s bzw. aus der Differenz aus dem Innenradius R_{OI} der Aufnahmeöffnung 6 und dem Radius R_{SN} des zweiten Kupplungsteiles 2 im Bereich des Grundes 4a seiner Nut 4.

Die Querschnittsfläche Aᵥ selbst ergibt sich für einen zwischen den Kupplungsteilen 1, 2 ausgebildeten Kreisring zu Aᵥ=π*(R²_{OI}-R²_{SN}) und ist daher in Fig. 11 mit einem in Klammem gesetzten Bezugszeichen "(Aᵥ)" unter dem Bezugszeichen für die Breite B veranschaulicht. Die radiale Querschnittsfläche der verpressten Umfangsdichtung 3 ist statt dessen mit dem Bezugszeichen A_{R} gekennzeichnet.

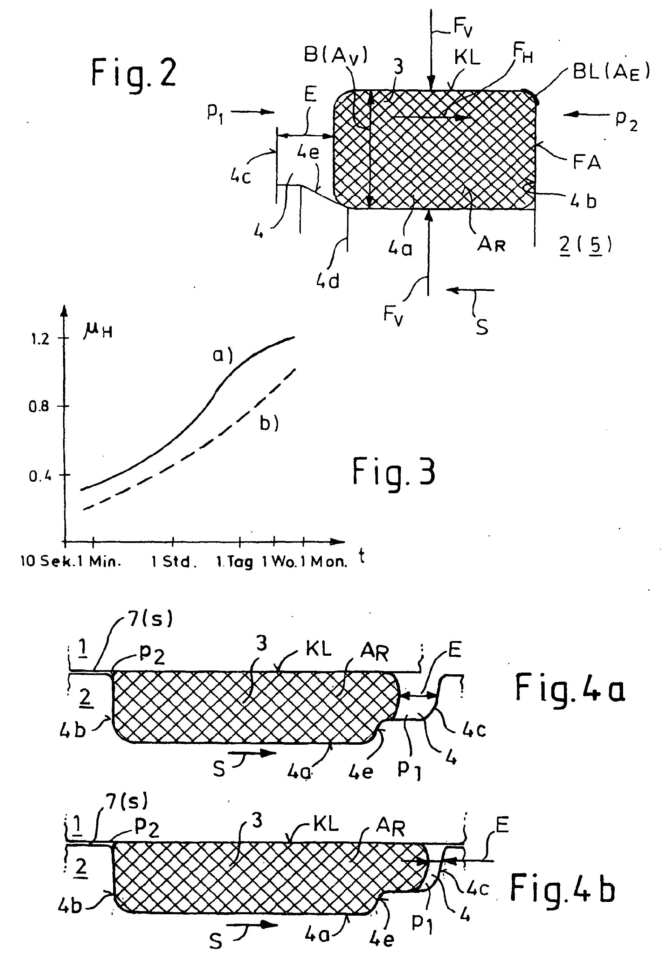

Ein die Permeation durch die Umfangsdichtung 3 bestimmendes Flächen-Permeationslängen-Verhäftnis A_{E}/KL wird durch eine permeationswirksame Teilumfangsfläche A_{E} der Umfangsdichtung 3 zu der Kontaktlänge KL gebildet. Die Teilumfangsfläche A_{E} ist in der Nähe des Spaltes 7 angeordnet und wird durch die in Fig. 2, 5, 6 und 11 fett hervorgehobene, insbesondere nicht an den Kupplungsteilen 1, 2 anliegende, Bogenlinie BL der verpressten, radialen Querschnittsfläche A_{R} der deformierten Umfangsdichtung 3 bestimmt.

Damit die permeationsbestimmende Teilumfangsfläche A_{E} klein bleibt - insbesondere sollte sie nicht größer sein als der halbe Wert, vorzugsweise nicht größer als ein Fünftel der senkrecht zur axialen Richtung X-X verlaufenden Querschnittsfläche Av der deformierten Umfangsdichtung 3 - ist es notwendig, dass die Umfangsdichtung 3 im Betriebszustand in der Nut 4 eine Position einnimmt, in der die Umfangsdichtung 3 mit einer axial gerichteten Anlagefläche FA an einer auf der Seite des abzudichtenden Spaltes liegenden Nutflanke 4b anliegt. Zu einer gegenüber liegenden Nutflanke 4c kann bzw. sollte dabei ein Abstand E bestehen, so dass die Umfangsdichtung 3 asymmetrisch in der Nut 4 angeordnet ist.

Die Länge der Bogenlinie BL nimmt in dieser Position bei verschwindender Bogenkrümmung im Minimalfall den Wert der Spaltweite s an. In diesem Fall sind der Querschnitt der unverpressten Umfangsdichtung 3, die Nuttiefe T und die Spaltweite s sowie die Nutlänge NL derart aufeinander abgestimmt, dass die permeationswirksame Teilumfangsfläche A_{E} unabhängig von einer Schnurstärke der unverpressten Umfangsdichtung 3 ist. Im Maximalfall sollte die Bogenlinie BL nicht länger sein als der halbe Wert, vorzugsweise ein Viertel des Wertes, der Breite B, d.h. der Summe aus Spaltweite s und Nuttiefe T.

Das Steckerteil ist in der in Fig. 1 dargestellten speziellen Ausführung des Verbindungssystems in der Aufnahmeöffnung 6 mittels einer (als Ganzes nicht näher bezeichneten) Verriegelungseinrichtung im eingesteckten Zustand gegen Lösen arretierbar. Die Verriegelungseinrichtung besteht dabei aus mindestens einem Halte- bzw. Rastelement - in der dargestellten Ausführung aus zwei axial hintereinander auf dem Steckerteil angeordneten Halte- bzw. Rastelementen 8, 9 - und aus einer jeweils mit einem Rastelement 8, 9 zusammenwirkenden Rastschulter 10. Die Rastelemente 8, 9 sind jeweils durch einen in jeweils einer Ringnut 11, 12 des Steckerteiles gehaltenen Sprengring gebildet. Das Gehäuseteil ist zweiteilig ausgeführt, indem es aus einem inneren Gehäuseteil 1a, das den Hauptteil der Aufnahmeöffnung 6 bildet, und aus einem mit dem inneren Gehäuseteil 1a lösbar verbindbaren und das innere Gehäuseteil 1a im Wesentlichen umfassenden äußeren Gehäuseteil 1b besteht. Die Rastschulter 10 ist einendig im Eingangsbereich der Aufnahmeöffnung 6 an dem äußeren Gehäuseteil 1 b ausgebildet. Wie dargestellt, ist das äußere Gehäuseteil 1b als mit dem inneren Gehäuseteil 1a verschraubbare Überwurfmutter ausgebildet.

Das zweite Kupplungsteil 2, also der Stecker, sowie sowohl das innere Gehäuseteil 1a, als auch das äußere Gehäuseteil 1b des ersten Kupplungsteiles 1 können bevorzugt aus metallischen Werkstoffen, insbesondere aus Aluminium- oder hochlegierten Edelstahllegierungen, bestehen. Die Umfangsdichtungen 3 können beispielsweise aus einer polymeren Fluor-Kohlenstoffverbindung, aus synthetischem Kautschuk, wie Silikonkautschuk, NBR oder H-NBR, PUR, EPDM, SBR, o.ä., bestehen und insbesondere einen hohen Anteil an Füllstoffen aufweisen. Die Shore-A-Härte kann bevorzugt im Bereich von 70 bis 90 liegen.

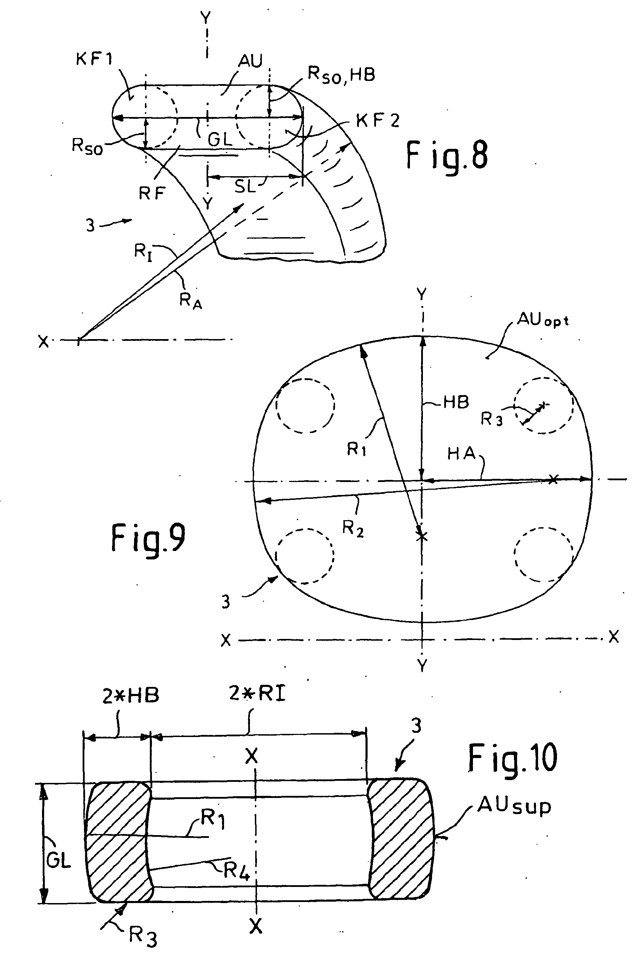

Hinsichtlich eines - als Quotient aus einem in der Nut 4 liegenden Anteil des verpressten, radialen Querschnitts A_{R} der Umfangsdichtung 3 und der Querschnittsfläche A_{N} der Nut 4 (gleich T*NL für rechteckigen Nutquerschnitt) berechneten - Füllgrades FG der Nut 4 ist es zur Erzielung einer hohen Dichtungswirkung und damit Minimierung der Leckmenge Q von Vorteil, wenn dieser Füllgrad FG im Bereich von mehr als 58,0 Prozent, vorzugsweise von mehr als 78,0 Prozent liegt. Unter Beachtung der möglichen Wärmeausdehnung der Umfangsdichtung 3 sollte dabei eine Extrusion in den Spalt 7 möglichst vermieden werden. Dies wird insbesondere durch die nachfolgend unter Bezugnahme auf die Fig. 8 bis 10 beschriebenen Ausführungsformen von Umfangsdichtungen 3 gewährleistet.

Aus Fig. 4a und 4b, die der Veranschaulichung des Nutfüllungsgrades bei Raumtemperatur, d. h. insbesondere bei 23 °C, und bei gegenüber der Raumtemperatur erhöh ter Temperatur, d. h. insbesondere bei einer etwa Betriebsbedingungen entsprechenden Temperatur von 150 °C, dienen, wird deutlich, dass bei asymmetrischer Anordnung der Umfangsdichtung in der Nut 4, der Nutfüllungsgrad kleiner als 100 Prozent bleibt. Dies gilt sowohl bei Raumtemperatur, als auch bei der für den Betrieb charakteristischen Temperatur, bei der es zu einer Wärmeausdehnung der Umfangsdichtung 3 in Steckrichtung S und damit vorteilhafterweise auch zu einer Vergrößerung der Kontaktlänge KL gekommen ist. Charakteristisch für die unvollständige Nutfüllung ist dabei das Maß E, welches den Abstand der Umfangsdichtung 3 von der Nutflanke 4c auf der Seite des höheren Druckes p₁ veranschaulicht und immer größer ist als Null.

Bei der bevorzugten asymmetrischen Lage der Umfangsdichtung 3 in der Nut 4 gilt für einen als Quotienten aus einem, in der auf der Seite des abzudichtenden Spaltes 7 angeordneten Hälfte der Nut 4 liegenden Anteil des verpressten, radialen Querschnitts A_{R} der Umfangsdichtung 3 und der halben Querschnittsfläche A_{N}/2 der Nut 4 berechneten Füllgrad - dass dieser im Bereich von bis zu 98 Prozent, bzw. insbesondere 100 Prozent, liegen sollte.

Eine - wie dargestellt - asymmetrische Lage der Umfangsdichtung 3 kann sich dabei bei entsprechender Dimensionierung der Umfangsdichtung und der Nut 4 dadurch einstellen, dass die Umfangsdichtung 3 durch die Differenz Δp zwischen dem erhöhten Druck p₁ und dem Vergleichsdruck p₂ in axialer Richtung X-X gegen die Nutflanke 4b auf der Seite des niedrigeren Druckes p₂ gedrückt wird, während auf der anderen Seite der Nut 4 noch der bereits erwähnte Abstand E zwischen der Nutflanke 4c und der Umfangsdichtung 3 besteht. Da das System bis zur Inbetriebnahme noch drucklos ist, kann durch Aufbringen eines Druckstoßes auf der Seite des erhöhten Druckes p₁ eine solche asymmetrische Lage gezielt eingestellt werden, wobei insbesondere eine über die Kontaktlänge KL auftretende Haftreibungskraft F_{H} zu überwinden ist.

Erfindungsgemäß ist nun vorgesehen, dass in der Nut 4 Mittel zur mechanischen Hemmung einer axialen Bewegung der Umfangsdichtung 3 angeordnet sind, die derart ausgeführt sind, dass die Umfangsdichtung 3 - sowohl, wenn das eine Kupplungsteil 2 mit dem Schaft 5 in die Aufnahmeöffnung 6 des anderen Kupplungsteiles 1 eingesteckt wird (Einsteckrichtung - Pfeil S), als auch bei einer entgegengesetzt wirkenden relativen Rückbewegung der Kupplungsteile 1, 2 zueinander in der Position gehalten ist, in der die Umfangsdichtung 3 den Spalt 7 der Aufnahmeöffnung 6 verschließt und dabei mit der axial gerichteten Anlagefläche FA an einer auf der Seite des abzudichtenden Spaltes 7 liegenden Nutflanke 4b anliegt.

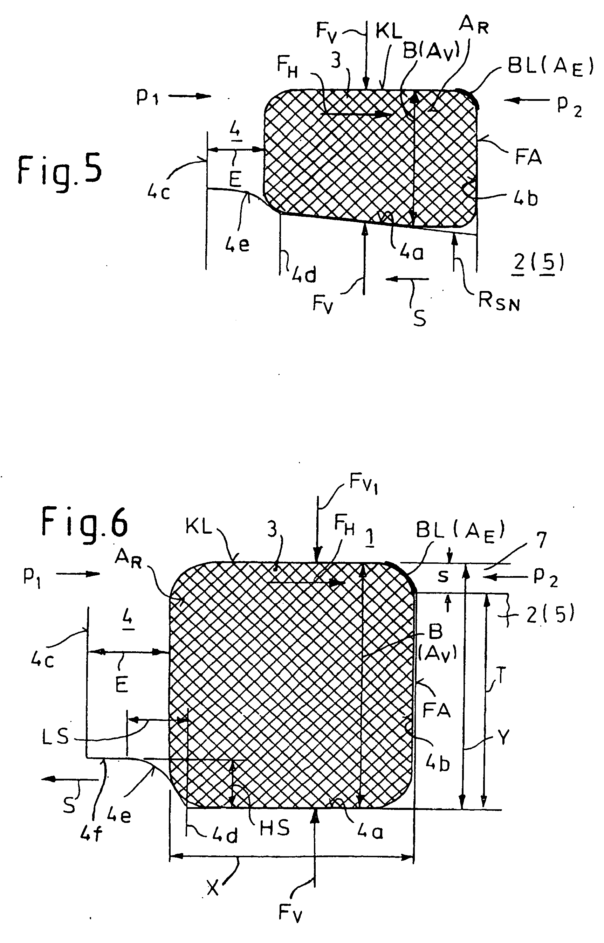

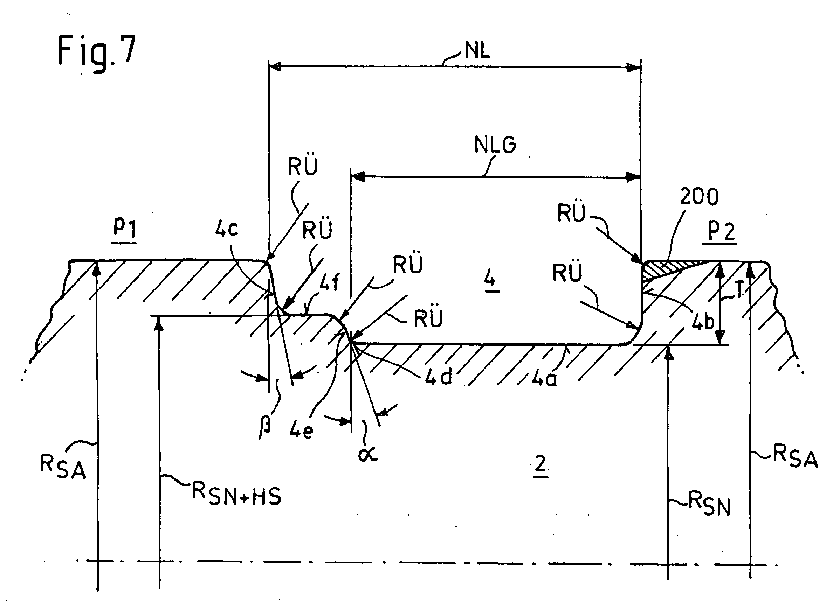

Bei der in Fig. 2 (sowie auch Fig. 5 bis 7) gezeigten ersten (bzw. zweiten und dritten) Ausführung der Erfindung ist dabei vorgesehen, dass die Mittel zur mechanischen Hemmung der axialen Bewegung der Umfangsdichtung 3 eine im Nutgrund 4a angeordnete, umfangsgemäß verlaufende Unstetigkeitsstelle 4d, insbesondere im Verlauf oder im Anstieg der Längsschnittkontur, wie eine Knicklinie oder eine Kante, umfassen. Außerdem umfassen diese Mittel in den genannten Ausführungen jeweils eine im Nutgrund 4a ausgebildete Schrägfläche 4e. Diese Schrägfläche 4e ist in der ersten Ausführung (Fig. 2) eben und in der zweiten (Fig. 5) und dritten (Fig. 6, 7) Ausführung gekrümmt, insbesondere konvex gekrümmt, und verläuft in Richtung S des axialen Einsteckens des einen Kupplungsteils 2 in die Aufnahmeöffnung 6 des anderen Kupplungsteiles 1 radial nach außen.

Dadurch wird erreicht, dass die Mittel zur Bewegungshemmmung der Umfangsdichtung 3 in Richtung S des axialen Einsteckens des einen Kupplungsteils 2 in die Aufnahmeöffnung 6 des anderen Kupplungsteiles 1 im Längsschnitt gesehen in radialer Richtung jeweils - sofern vorhanden - an der Unstetigkeitsstelle 4d eine sprungartige und/oder - sofern vorhanden - an der Schrägfläche 4e eine stetige Verringerung des Querschnitts der Nut 4 bewirken. Dabei kann durch die konvexe Krümmung und/oder eine Stufe mit Vorteil bei fortschreitendem Einstecken - zumindest abschnittsweise - eine überproportionale Hemmung der axialen Bewegung der Umfangsdichtung 3 erzielt werden.

Diese Mittel zur mechanischen Hemmung der axialen Bewegung der Umfangsdichtung 3 können dabei insbesondere derart ausgebildet sein, dass sie - vorzugsweise in axialer Richtung - eine Erhöhung der durch die Deformation beim Einstecken und die Erzeugung der radialen Vorpresskaft Fᵥ in der Umfangsdichtung 3 schon vorhandenen Eigenspannungen bewirken. Durch eine entsprechende Dimensionierung der Mittel wird es dadurch möglich, die eingangs beschriebene - und in Fig. 3 in quantitativer Form für eine Umfangsdichtung 3 aus Polyurethan (Kurve a)) und eine Umfangsdichtung 3 aus NBR (Kurve b)) wiedergegebene - Erscheinung des Anstiegs der Haftreibungszahl µ_{H} mit der Zeit t zu kompensieren. Aus der Grafik ist dabei ersichtlich, dass die Haftreibungszahl µ_{H} ausgehend von einem Wert von kleiner als 0,4 schon nach wenigen Sekunden ansteigt und nach einer Woche etwa das Doppelte bis etwa Dreifache ihres Ursprungswertes erreichen kann. Dabei werden Werte der Haftreibungszahl µ_{H} von größer 1 erreicht, was bedeutet, dass die beispielsweise nach einem Überstecken bei einer Rückbewegung des Schaftes 5 zu überwindende, entgegengesetzt wirkende Haftreibungskraft F_{H} über den Wert der Normalkraft, d.h. den Wert der Vorpresskraft Fᵥ, hinausgeht.

Die genannte Erhöhung der Eigenspannungen kann insbesondere dadurch erzielt werden, dass die Mittel zur mechanischen Hemmung der axialen Bewegung der Umfangsdichtung 3 eine in radialer Richtung vom Nutgrund 4a ausgehende, insbesondere durch eine konvexe Wölbung gebildete, Stufe umfassen, wie dies in Fig. 5 und noch deutlicher ausgeprägt in Fig. 6 und 7 dargestellt ist. In Fig. 6 ist dabei diese Stufe durch die Angabe ihrer Höhe HS und ihrer Länge LS gekennzeichnet, wobei es als besonders vorteilhaft im Hinblick auf eine optimale Eigenspannungsverteilung in der Umfangsdichtung 3 anzusehen ist, wenn die vom Nutgrund 4a ausgehende Stufe eine Höhe HS aufweist, die etwa einem Fünftel bis einem Drittel einer maximalen Nuttiefe T oder einer maximalen radialen Hauptabmessung Y des Querschnitts der Umfangsdichtung 3 im unverpressten Zustand entspricht und wenn die vom Nutgrund 4a ausgehende Stufe eine Länge LS aufweist, die etwa einem Fünftel bis einem Viertel einer maximalen axialen Hauptabmessung GL des Querschnitts der Umfangsdichtung 3 im unverpressten Zustand entspricht. Fig. 6 sind jedoch im Gegensatz zu diesen Forderungen nur die Werte der charakteristischen Hauptabmessungen X und Y im vierpressten Zustand zu entnehmen. Die genannten Hauptabmessungen X, Y entsprechen in Fig. 8 bis 10, die Umfangsdichtungen 3 im unverpressten Zustand zeigen, den Größen, GL (X) und 2*R_{SO} (Y) in Fig. 8, 2*HA (X) und 2*HB in Fig. 9 und GL (X) und 2*HB in Fig. 10.

Fig. 7, die - wie bereits erwähnt - im Längsschnitt und noch stärkerer Vergrößerung eine Teildarstellung eines zweiten Kupplungsteiles 2 eines erfindungsgemäßen Verbindungssystems gemäß der dritten Ausführung wiedergibt, zeigt gegenüber Fig. 6 einige geometrischen Detailveränderungen. So ist zunächst ersichtlich, dass alle vorhandenen, umfangsgemäß verlaufenden Kanten in und an der Nut 4 durch Über gangsradien RÜ verrundet sind. Dadurch kommt es zunächst zu einer besonders schonenden Aufnahme der Umfangsdichtung 3 in der Nut 4. Des Weiteren können insbesondere die Übergangsradien RÜ am Übergang von der Anlage-Nutflanke 4b zum Nutgrund 4a, der eine Länge NLG aufweist, vom Nutgrund 4a zur Schrägfläche 4e, und von der Oberfläche 4f der Stufe zu der Nutflanke 4c auf der Seite des höheren Druckes p₁ an die Form der Umfangsdichtung 3 - beispielsweise an die noch nachstehend unter Bezugnahme auf Fig. 9 und 10 beschriebenen Radien R₃ - derart angepasst werden, so dass an diesen Stellen ein nahezu formschlüssiges Ineinandergreifen vorliegt. Das bedeutet, dass insbesondere die Übergangsradien RÜ am Übergang von der Anlage-Nutflanke 4b zum Nutgrund 4a und von der Oberfläche 4f der Stufe zu der Nutflanke 4c auf der Seite des höheren Druckes p₁, wie auch der Übergangsradius RÜ von der Schrägfläche 4e zur Oberfläche 4f der Stufe etwa genauso groß gewählt werden, wie die Radien R₃, mit denen die Kanten der jeweiligen Umfangsdichtung 3 verrundet sind. Der Übergangsradius RÜ vom Nutgrund 4a zur Schrägfläche 4e kann dagegen kleiner ausgebildet sein, damit die gewünschte Hemmung der Axialbewegung einen stärker sprunghaften Charakter annimmt. In der gleichen, kleineren Größenordnung können auch die Übergangsradien RÜ an den Nutflanken 4b, 4c im Bereich des Spaltes 7 liegen.

Sowohl die Schrägfläche 4e als auch die Nutflanke 4c auf der Seite des höheren Druckes p₁ können jeweils eine Neigung aufweisen, die durch die in Fig. 7 mit den Bezugszeichen α und β bezeichneten Winkel zu einem jeweils in radialer Richtung verlaufenden Strahl quantitativ beschrieben werden können. Der Winkel α kann dabei mit Vorteil in einem Bereich bis zu 25°, vorzugsweise bis zu 10°, und der Winkel β zwischen 5° und 60°, vorzugsweise zwischen 15° und 30°, liegen.

Die Nutlänge NL und die Länge NLG (Abstand zwischen 4d und 4b) des Nutgrundes 4a können mit Vorteil im Hinblick auf die maximale axiale Hauptabmessung GL des Querschnitts der Umfangsdichtung 3 im unverpressten Zustand bzw. auf die entsprechenden charakteristischen Hauptabmessungen X im verpressten Zustand dimensioniert sein. Die genannten Hauptabmessungen X sollten bei Raumtemperatur nicht kleiner, aber auch nicht wesentlich größer als die Länge NLG des Nutgrundes 4a sein. Insbesondere sollte die axiale Hauptabmessung der auf dem zweiten Kupplungsteil 2 montierten, aber noch nicht verpreßten Umfangsdichtung 3 nicht so groß sein, dass die Umfangsdichtung 3 bei Anlage an der zur Anlage bestimmten Nutflanke 4b über die Schrägfläche 4e bzw. die Stufe in Richtung auf die Nutflanke 4c auf der Seite des höheren Druckes p₁ hinaus geschoben wird. In dieser Position besteht in jedem Fall zwischen Umfangsdichtung 3 und Nutflanke 4c der bereits erläuterte Abstand E, der auch als Expansionsraum bezeichnet werden könnte. Wenn das zweite Kupplungsteil 2 mit der darauf montierten Umfangsdichtung 3 in das erste Kupplungsteil gesteckt ist, sollte nach Deformation der Umfangsdichtung 3 der Abstand E immer noch vorhanden sein, ebenso im Betriebszustand bei erhöhtem Druck und erhöhter Temperatur, wie dies auch in Fig. 4b dargestellt ist. Danach ist die Gesamtlänge NL der Nut 4 zu bemessen. Bestenfalls unter als extrem anzunehmenden Temperatur- und Druckbedingungen (T - maximal, p₁ - minimal) sollte der Abstand E den Wert Null annehmen können, woraus sich dann ein Füllgrad der Nut 4 von 100 Prozent ergeben kann.

Was die Reibung beim Einstecken unter der Wirkung der Vorspannkraft Fᵥ betrifft, so muss dazu bemerkt werden, dass die Größe der Vorspannkraft Fᵥ bei einem Einstecken des Schaftes 5 mit der bereits in der Nut 4 angeordneten Umfangsdichtung 3 die notwendigerweise aufzubringende Steckkraft Fₛ gleichsinnig beeinflußt und daher - allerdings in einer gemäß dem Durchmesser der Dichtung entsprechenden Abstufung - einen vorgegebenen Wert nicht überschreiten sollte. Die Steckkraft Fₛ wirkt dabei entgegen der sich später ausbildenden Haftreibungskraft F_{H}, also in Steckrichtung S. Man rechnet bekanntermaßen bei Nenndurchmessern von 12 mm mit geforderten Maximalsteckkräften Fₛ von unter 50 N, vorzugsweise sogar von unter 10 N. Für größere Nenndurchmesser oder auch für kleine Nenndurchmesser, aber bei dem für CO₂ relevanten Druckbereich (p₁ = 10 bar bis 180 bar), treten größere Steckkräfte Fₛ auf, die mehr als 100 N und 120 N erreichen können. Solche Steckkräfte Fₛ können erfindungsgemäß vermieden und vorteilhafterweise für Innenradien R_{OI} des ersten Kupplungsteiles 1 im Bereich von etwa 6 mm bis 13 mm Steckkräfte Fₛ von weniger als 100 N, vorzugsweise weniger als 50 N und sogar von weniger als 30 N, erreicht werden.

Es ist grundsätzlich möglich, dass der Querschnitt AU der in dem erfindungsgemäßen System zum Einsatz gelangenden Umfangsdichtung 3 im unverpressten Zustand eine kreisrunde oder elliptische Form aufweist. Bevorzugt ist es jedoch, dass - wie für die zweite Ausführung in Fig. 5 gezeigt - die Umfangsdichtung 3 eine Querschnittsform aufweist, die derart ausgebildet ist, dass sich der Querschnitt Av der Umfangsdichtung 3 im bestimmungsgemäßen Einbauzustand der Umfangsdichtung 3 in Richtung S des axialen Einsteckens des einen Kupplungsteils 2 in die Aufnahmeöffnung 6 des anderen Kupplungsteiles 1 im Längsschnitt gesehen in radialer Richtung zumindest abschnittsweise verringert. Dem entspricht in der zeichnerischen Darstellung von Fig. 5 eine konusartige Abnahme der Breite B in der Steckrichtung S, wobei auch der Nutgrund 4a konusartig verläuft - und dies nicht nur im Bereich der bereits erwähnten Schrägfläche 4e, sondern auch in einer der Schrägung der Innenseite der Umfangsdichtung 3 komplementären Weise, mit in Steckrichtung S zunehmendem Radius R_{SN} des Schaftes 5 auf dem Grund 4a der Nut 4. Der Nutgrund 4a selbst stellt somit in dieser Ausführung ebenfalls ein Mittel zur mechanischen Hemmung einer axialen Bewegung der Umfangsdichtung 3 dar.

Zwei besonders bevorzugte Ausführungsformen einer Umfangsdichtung 3 für ein erfindungsgemäßes Verbindungssystem zeigen - wie bereits erwähnt - Fig. 8 und 9. Für diese Ausführungen sind der Querschnitt - AU in Fig. 8 bzw. AUₒₚₜ in Fig. 9 - der unverpressten Umfangsdichtung 3, die Nuttiefe T, die Nutlänge NL und die Spaltweite s speziell aufeinander abgestimmt, so dass bei der Montage nur geringe Steckkräfte Fₛ auftreten und dass bei einer geringen Menge Q des durch die Umfangsdichtung 3 eines erfindungsgemäßen Verbindungssystems durchgesetzten Fluids unter hohen Systemdruckdifferenzen Δp, insbesondere unter Systemdrücken p₁ von bis zu mehr als 150 bar bzw. 180 bar, ein zuverlässiger Ausgleich der Fertigungstoleranzen der Kupplungsteile 1, 2 erfolgt. Dadurch ist es möglich, dass ein Wert der Menge Q des in Folge von Permeation durch die Umfangsdichtung 3 durchgesetzten Fluids nicht größer ist als etwa 2,5 g pro Jahr und Verbindung, vorzugsweise nicht größer als 1 g pro Jahr und Verbindung.

Für die in Fig. 8 dargestellte Ausführungsform ist es charakteristisch, dass sich der Querschnitt AU der unverpressten Umfangsdichtung 3 in symmetrischer Weise zu einer Mittenachse Y-Y aus zwei gleich großen Halbkreisflächen KF1, KF2 - es könnten auch Kreissegment-Flächen sein - und einer dazwischen liegenden Rechteckfläche RF zusammensetzt. In der Darstellung gemäß Fig. 8 ist zweimal ein O-Ring in die Querschnittsform einbeschrieben. Der O-Ring bestimmt mit dem Radius Rso eine radiale Haupterstreckung HB des Querschnitts AU der Schnur und die Krümmung in axialer Richtung X-X. Die axiale Haupterstreckung HA ergibt sich als Seitenlänge SL der Halbfläche des Querschnitts AU, der die axiale Gesamtlänge GL aufweist. Die Wahl dieser Gesamtlänge GL - beispielsweise im Verhältnis zu einer vorgegebenen Nutlänge NL - stellt neben der Größe der radialen Deformation der Umfangsdichtung 3 bei der Montage eine Möglichkeit dar, um im verpressten Zustand den Füllungsgrad FG der Nut 4 zu variieren.

Fig. 9 zeigt eine weitere, als optimal zu betrachtende Ausführung einer Umfangsdichtung 3 für ein erfindungsgemäßes Verbindungssystem, die sich dadurch auszeichnet, dass der Querschnitt AUₒₚₜ der unverpressten Umfangsdichtung 3 in der Grundgestalt aus einem Rechteck besteht, das zwei mit einem ersten Krümmungsradius R₁ konvex gewölbte Längsseiten, zwei mit einem zweiten Krümmungsradius R₂ konvex gewölbte Querseiten und vier mit einem dritten Krümmungsradius R₃ konvex verrundete Ecken aufweist. Der dritte, insbesondere bei der Verpressung der Umfangsdichtung die Bogenlänge BL bestimmende und den Füllungsgrad FG beeinflussende, Krümmungsradius R₃ ist dabei kleiner als der erste, insbesondere die Kontaktlänge KL bestimmende, Krümmungsradius R₁ und der erste Krümmungsradius R₁ ist wiederum kleiner als der zweite Krümmungsradius R₂, der ebenfalls Bogenlänge BL und Füllungsgrad FG - jedoch in geringerem Maß als der dritte Radius R₃ - mitbestimmt. Durch eine solche Querschnittsform kann bei einem hohen Füllgrad FG der Nut 4 und niedriger Vorpresskraft Fᵥ eine kurze Bogenlänge BL und damit eine im Vergleich mit einem O-Ring oder einem Ring mit elliptischem Querschnitt kleinere permeationswirksame Teilumfangsfläche A_{E} erzielt werden.

Sowohl zur Erzielung eines günstigen Verhältnisses Av/KL der senkrecht zur axialen Richtung X-X verlaufenden Querschnittsfläche Av der deformierten Umfangsdichtung 3 zur Kontaktlänge KL, als auch zur Erzielung eines günstigen Verhältnisses A_{E}/KL der permeationsbestimmenden Teilumfangsfläche A_{E} zur Kontaktlänge KL - ist es von Vorteil, wenn der Querschnitt AU bzw. AUₒₚₜ der Umfangsdichtung 3 im unverpressten Zustand bereits eine Vorform aufweist, bei der eine Formzahl, ein Quotient FZ_{U} = HA/HB aus einer axialen Haupterstreckung des Dichtungsquerschnitts AU bzw. AUₒₚₜ, im in Fig. 9 dargestellten Fall der großen Halbachse HA, und einer radialen Haupter streckung, im in Fig. 9 dargestellten Fall der kleinen Halbachse HB, einen Wert von größer 1, vorzugsweise von größer 2, aufweist.

Fig. 10 zeigt eine dritte, ebenfalls als optimal zu betrachtende Ausführung einer Umfangsdichtung 3 für ein erfindungsgemäßes Verbindungssystem. Auch bei dieser Ausführung kann der Querschnitt AUₛᵤₚ der unverpressten Umfangsdichtung 3 in der Grundgestalt als ein Rechteck aufgefaßt werden, welches jedoch - im Gegensatz zu den vorstehend beschriebenen Ausführungen - tonnenartig nach außen gewölbt ist. Wie bei der Ausführung in Fig. 9 ist dabei ein erster Krümmungsradius R₁ für die äußere, konvex gewölbte Längsseite, jedoch - im Gegensatz zur Ausführung in Fig. 9 ein zweiter Krümmungsradius R₄ für die innere, konkav gewölbte Längsseite vorgesehen. Diese konkave Verwölbung der inneren Längsseite führt im montierten Zustand der Umfangsdichtung 3 auf dem zweiten Kupplungsteil 2 und auch später nach dem Stecken in das erste Kupplungsteil 1 sowie unter Betriebsbedingungen vorteilhafterweise zu einer Verringerung der Reibung zwischen Umfangsdichtung 3 und Nutgrund 4a, weil die durch die Deformation der solchermaßen geformten Umfangsdichtung 3 entstehenden Eigenspannungen die Vorpresskraft Fᵥ im mittleren Bereich der inneren Längsseite herabsetzen. Der erste Krümmungsradius R₁ für die äußere, konvex gewölbte Längsseite kann dabei mit Vorteil geringfügig - etwa 0,4 bis 1,6 mm - größer sein als der zweite Krümmungsradius R₄ für die innere, konkav gewölbte Längsseite, so dass die konvexe Krümmung flacher verläuft als die konkave Krümmung. Durch die Wahl der Krümmungen der Längsseiten des Querschnitts der Umfangsdichtung 3 kann über den jeweiligen Verlauf der Längsseiten eine variable vorherbestimmte Pressungsverteilung eingestellt werden.

Als weiterer Unterschied zu der Ausführung in Fig. 9 ist bei der Ausführung der Umfangsdichtung 3 in Fig. 10 für die Querseiten des Dichtungsquerschnitts keine Wölbung, sondern ein ebener Verlauf vorgesehen. Allerdings zeigt Fig. 10 - wiederum in Übereinstimmung mit Fig. 9 - vier mit einem dritten Krümmungsradius R₃ konvex verrundete Ecken für die Umfangsdichtung 3. Auch hier gilt, dass der dritte, insbesondere bei der Verpressung der Umfangsdichtung die Bogenlänge BL bestimmende und den Füllungsgrad FG beeinflussende, Krümmungsradius R₃ kleiner als der erste, insbesondere die Kontaktlänge KL bestimmende, Krümmungsradius R₁, und auch kleiner als der zweite, in dieser Ausführung mit R₄ bezeichnete Krümmungsradius ist. Mit dieser Ausführung der Umfangsdichtung ist es möglich, dass ein Wert der Menge Q des in Folge von Permeation durch die Umfangsdichtung 3 durchgesetzten Fluids nicht größer ist als etwa 1,0 g pro Jahr und Verbindung, vorzugsweise nicht größer als 0,5 g pro Jahr und Verbindung.

Es kann auch vorgesehen sein, dass die Umfangsdichtung 3 durch einen O-Ring mit im unverpressten Zustand kreisförmigem Querschnitt gebildet ist, bei dem das Verhältnis von Innendurchmesser R_{I} zur Stärke seiner Schnur 2*R_{SO,} kleiner oder gleich 6, vorzugsweise kleiner ist als 3, und bei dem eine minimale Verpressung V = 100% * (1 - B / (2 * R_{SO})) in einem Bereich von mehr als 15 Prozent, vorzugsweise von mehr als 25 Prozent bis zu maximal 40 Prozent, liegt.

Im Gegensatz zu der letzteren und auch zu den in Fig. 8 bis 10 dargestellten Ausführungen kann es aber im Rahmen der Erfindung auch vorgesehen sein, dass der Querschnitt der Umfangsdichtung 3 im unverpressten Zustand eine Vorform aufweist, bei der der Quotient FZ_{U} aus einer axialen Haupterstreckung HA und einer radialen Haupterstreckung HB des Dichtungsquerschnitts einen Wert von kleiner 1, vorzugsweise von kleiner 0,5, aufweist. Dies ist bei der Ausführung der Erfindung gemäß Fig. 11 gegeben. In dieser Ausführung ist vorgesehen, dass sich die Mittel zur mechanischen Hemmung der Bewegung der Umfangsdichtung 3 über eine gesamte Tiefe T der Nut 4 erstrecken. Insbesondere umfassen die Mittel zur mechanischen Hemmung der axialen Bewegung der Umfangsrichtung 3 einen Stützring 13 mit höherer Festigkeit als die der Umfangsdichtung 3 bzw. sind durch einen solchen Stützring 13 gebildet. Dieser Stützring 13 ist -anders als allgemein üblich und z.B. in der EP 1 164 317 A2 beschrieben- auf der Seite der Umfangsdichtung 3 angeordnet, die der Seite des durch die Umfangsdichtung zu verschließenden Spalts 7 der Aufnahmeöffnung 6 gegenüber liegt.

Der Stützring 13 muss mit möglichst kleinen Spalten - einerseits zwischen ihm und dem Nutgrund 4a und andererseits zwischen ihm und dem äußeren Gehäuseteil 1 - eingepasst sein. Durch diese Einpassung wird erreicht, dass bei einem Druckstoß sich eine Druckdifferenz derart aufbaut, dass die Umfangsdichtung 3 gegen die Nutflanke 4b gedrückt wird, an der sich ihre bestimmungsgemäße Anlagefläche FA befindet. Wenn der Stützring 13 an die Umfangsdichtung 3 anvulkanisiert ist, kann auch bei Drücken, die sich - im Gegensatz zu einem Druckstoß - wie statische Drücke verhalten, die Umfangsdichtung 3 angedrückt werden. Das Anvulkanisieren bewirkt unter anderem, dass sich die Umfangsdichtung 3 nicht durchwölbt und somit die Nutflanke 4b berührt, aber nicht an der Wandung gleitet.

Bei der in Fig. 11 dargestellten Ausführung wird der Tatsache Rechnung getragen, dass durch das Verhältnis FZ_{U} der axialen und radialen Hauptabmessungen in der Schnur der Umfangsdichtung 3 auch auf das Haftreibungsverhaften der Umfangsdichtung 3 Einfluß genommen werden kann. Dabei darf aber die axiale Hauptabmessung der Schnur nicht maßgeblich verändert werden, da die Kontaktlänge KL sonst zu klein wird. Durch die - wie dargestellt - vergleichsweise große radiale Hauptabmessung (Breite B) der Schnur wird die druckbelastete Fläche AV vergrößert, wobei die resultierende Druckkraft der Haftreibungskraft F_{H} entgegenwirkt. Diese kompensierende Wirkung ist vorteilhafterweise zeitunabhängig, erfordert jedoch bei gleicher Nennweite wie bei den drei vorhergehenden Ausführungen einen größeren radialen Bauraum.

Fig. 12 zeigt schematisch eine Vorrichtung 100 zur Bestimmung der Menge von infolge von Permeation durch eine Umfangsdichtung 3 eines erfindungsgemäßen Verbindungssystems durchgesetzten Fluids. Darin bezeichnen die Bezugszeichen 101 eine Mikroprozessorsteuerung, 102 eine Vakuummessröhre, 103 jeweils Gasleitungen zu einer Vakuumpumpe, 104 einen Thermostaten, 105 eine Permeationskammer, 106 die Prüfkörper und 107 eine Messgaszuleitung.

Die Prüfkörper 106 werden in der Permeationskammer 105 unter definierten, mit Hilfe der Vakuumpumpe, der Vakuummessröhre 102 und des Thermostaten 104 durch die Mikroprozessorsteuerung 101 einstellbaren und protokollierbaren Bedingungen getestet. Das Messgas 107 ist dabei infolge des aufgebauten Druckgefälles in der Permeationskammer 105 bestrebt, durch die Prüfkörper 106 zu diffundieren. Die Messung der entsprechend durchgesetzten (Leckage-)Gasmenge erfolgt unter realitätsnahen Bedingungen, insbesondere mit Kohlendioxid als Messgas 107. Es erfolgt eine integrale Messung von mehreren, insbesondere fünf, Prüfkörpern 106 gleichzeitig, wobei jeweils gesondert Werte für bestimmte Betriebspunkte einer Anlage, z. B. einer CO₂-Klimaanlage eines Kraftfahrzeugs, erfasst werden, in der ein erfindungsgemäßes Verbindungssystem zum Einsatz kommen soll. Entsprechend einer nach fachüber greifend einheitlichen Kriterien vorgegebenen Wichtung der Leckagegasmengen an den einzelnen Betriebspunkten wird dann ein resultierender Wert der Menge Q des in Folge von Permeation durch die Umfangsdichtung 3 durchgesetzten Fluids in g pro Jahr und Verbindung bestimmt.

Die Erfindung ist nicht auf die dargestellten Ausführungsbeispiele beschränkt, sondern umfasst auch alle im Sinne der Erfindung gleichwirkenden Ausführungen. So ist es z. B. möglich, dass nur das erste Kupplungsteil 1 anstelle des zweiten Kupplungsteiles 2 die Nut 4 aufweist. Ergänzend zu den bisher dargestellten technischen Maßnahmen kann mit Vorteil auch vorgesehen werden, dass die Umfangsdichtung 3 mit einer Gasbarrieren-Beschichtung versehen ist, was es gestattet, ohne Zunahme der Leckmenge neben der radialen Hauptabmessung (Breite B) der Schnur auch die axiale Hauptabmessung (Gesamtlänge GL) gegenüber den als vorstehend als optimal beschriebenen Werten noch zu verringern.

Des Weiteren ist es auch möglich, zusätzlich über eine Schmierung, die beispielsweise durch eine Gleitbeschichtung, wie einem Gleitlack oder einem Trockenschmiermittel, die Reibungszahl µ_{H} verringert, auf die Haftreibung im Sinne einer Minimierung einzuwirken. Dabei kann für einen tragfähigen Schmierfilm von einer zeitunabhängigen Wirkung ausgegangen werden. Es ist jedoch zu fordern, dass der Permeationwiderstand im Schmierfilm zumindest derart groß ist, dass kein übermäßiger Anstieg (beispielsweise mehr als 10 Prozent) der Leckmenge Q auftritt.

Schließlich zeigt Fig. 7 mit dem Bezugszeichen 200 ein auf der Seite des niedrigeren Druckes p₂ am zweiten Kupplungsteil 2 am Außenradius R_{SA} des Schaftes 5 angeordnetes Element, welches bei erhöhter Temperatur der Verringerung der Spaltweite s des Spaltes 7 zwischen den Kupplungsteilen 1, 2 des erfindungsgemäßen Verbindungssystems dient. Diesem Element 200 wird - neben den Mitteln zur mechanischen Hemmung der Axialbewegung der Umfangsdichtung 3 in der Nut 4 - eine eigenständige erfinderische Bedeutung zugemessen, insofern das Element 200 - bei hoher Montagefreundlichkeit und Funktionssicherheit sowohl bei der Herstellung der Kupplungsverbindung, als auch im Betriebszustand des erfindungsgemäßen Systems - gewährleistet, dass eine verringerte Menge des Fluids durch die Umfangsdichtung 3 durchgesetzt wird. Dies ist ursächlich darauf zurückzuführen, dass - wie oben ausge führt wurde - die Länge der permeationsbestimmenden Bogenlinie BL der Umfangsdichtung 3 bei Anlage der Umfangsdichtung 3 an der dafür vorgesehenen Nutflanke 4b bei verschwindender Bogenkrümmung im Minimalfall den Wert der Spaltweite s annimmt. Wird nun die Spaltweite s verringert, so kommt es zu einer Abnahme der Menge des durch Permeation durch die Umfangsdichtung 3 durchgesetzten Fluids.

Es war oben festgestellt worden, dass das erste Kupplungsteil 1 und das zweite Kupplungsteil 2 bevorzugt aus metallischen Werkstoffen, insbesondere aus Aluminium- oder hochlegierten Edelstahllegierungen, bestehen können. Hierbei weisen die verschiedenen, grundsätzlich für eine Anwendung geeigneten Werkstoffe naturgemäß auch unterschiedliche Eigenschaften auf. So ist für die nachfolgend angegebenen Werkstoffe jeweils der zugeordnete thermische Längenausdehnungskoef fizient (angegeben in 10⁻⁶ K⁻¹) charakteristisch: Magnesium - 24,5; Aluminium, allgemein - 23,8; AlMgSi1 - 23,3; Bronze - 17,3; Kupfer - 16,2; X12CrNi 18.8 - 16,0; Nickel - 13,3; Beryllium 12,3 und Stahl, allgemein - 11,1. Wenn beispielsweise für das erste Kupplungsteil 1 und das zweite Kupplungsteil 2 jeweils ein Stahlwerkstoff eingesetzt, jedoch in Abweichung dazu das Element 200 aus Aluminium gefertigt wird, so liegt für die Längenausdehnungskoeffizienten eine Differenz von 2,7 * 10⁻⁶ K⁻¹ vor. Diese Differenz wird bei Erhöhung der Temperatur von Raum- auf Betriebstemperatur im Sinne einer Verringerung der Spaltweite s wirksam. Zwar ist beispielsweise bei Zugrundelegung der Werte 12,1 ± 0,05 mm für R_{OI} und 12,0 - 0,10 mm für R_{SA} nicht mit einem vollständigen Verschluss des Spaltes 7 zu rechnen, jedoch mit einer durchaus permeationswirksamen Verringerung seiner Spaltweite s. Das Element 200 kann in der geometrischen Form von der dargestellten, im Querschnitt in der Grundgestalt im Wesentlichen dreieckigen Form abweichen, jedoch besitzt die dagestellte Form den Vorteil, dass auf der der Nut 4 zugewandten Seite des Elements 200, wobei eine Dreieckseite einen Teil der Nutflanke 4b bildet, mit der größten radialen Wärmeausdehnung zu rechnen ist, da diese sich proportional zur jeweiligen Ausgangs-Längenabmessung verhält. Das Element 200 sollte dabei fest - kraft-, form- und/oder stoffschlüssig, mit dem Grundkörper des zweiten Kupplungsteiles 2 verbunden sein.

### Bezugszeichen

- 1: erstes Kupplungsteil (Gehäuseteil)
- 1a: inneres Gehäuseteil
- 1 b: äußeres Gehäuseteil
- 2: zweites Kupplungsteil (Steckerteil)
- 3: Umfangsdichtung
- 4: Nut für 3 in 5
- 4a: Nutgrund von 4
- 4b: Nutflanken von 4 bei 7
- 4c: Nutflanke von 4
- 4d: Unstetigkeitsstelle in 4/4a
- 4e: Schrägfläche von 4
- 5: Schaft von 2
- 5a: Belüftungsnut in 5
- 6: Aufnahmeöffnung von 1
- 7: Spalt zwischen 1 und 2
- 8, 9: Rastelemente
- 10: Rastschulter
- 11, 12: Ringnuten für 8,9
- 13: Stützring

- 100: Permeationsmesseinrichtung
- 101: Mikroprozessorsteuerung von 100
- 102: Vakuummessröhre
- 103: Gasleitung zur Vakuumpumpe
- 104: Thermostat
- 105: Permeationskammer
- 106: Prüfkörper
- 107: Messgaszuleitung

- 200: Element zur Verringerung von s
- A_{E}: permeationsbestimmende Teilumfangsfläche von Aᵥ
- A_{N}: Querschnitt von 4
- A_{R}: radialer Querschnitt von 3, deformiert
- Av: Querschnitt von 3, deformiert, senkrecht zur axialen Richtung
- AU: radialer Querschnitt von 3 (Ausführung in Fig. 8), unverpresst
- AUₒₚₜ: radialer Querschnitt von 3 (Ausführung in Fig. 9), unverpresst
- AUₛᵤₚ: radialer Querschnitt von 3 (Ausführung in Fig. 10), unverpresst
- B: (radiale) Breite von Aᵥ
- BL: Bogenlänge von Av
- E: Abstand zwischen 3 und 4c
- F_{H}: Haftreibungskraft
- Fᵥ: Vorpresskraft von 3
- F_{S}: Steckkraft von 2 mit 3
- FA: Anlagefläche von 3 an 4b
- FG: Füllgrad von 4
- FZ_{U}: Formzahl Quotient aus HA und HB
- GL: axiale Gesamtlänge von AU
- HA: axiale Haupterstreckung von 3, lange Halbachse
- HB: radiale Haupterstreckung von 3, kurze Halbachse
- KF1, KF2: Halbkreisflächen von AU
- KL: Kontaktlänge von 3 mit 1 oder 2
- NL: Nutlänge von 4 (in Richtung X-X)
- p₁: hoher Fluiddruck
- p₂: niedriger Fluiddruck
- Q: Fluidmenge, Leckmenge
- R₁, R₂, R₃, R₄: Radien in AUₒₚₜ/ AUₛᵤₚ (Fig. 9, 10)
- R_{A}: Außenradius von 3, unverpresst
- Rₐ: mittlerer Rauheitswert von 1, 2
- R₁: Innenradius von 3, unverpresst
- Rₘₐₓ: maximaler Rauheitswert von 1, 2
- R_{SA}: Außenradius von 5
- R_{SN}: Radius von 5 auf dem Grund von 4
- R_{SO}: Wert für R_{RS} bei Kreisquerschnitt
- R_{OI}: Innenradius von 6
- RF: Rechteckfläche von AU
- RÜ: Übergangsradius
- S: Steckrichtung von 2 in 1
- s: Spaltweite von 7
- SL: Seitenlänge der Halbfläche von AU
- T: Tiefe von 4
- t: Zeit
- V: Verpressung
- X: charakteristische axiale Hauptabmessung
- X-X: Längsachse von 1, 2
- Y: charakteristische radiale Hauptabmessung
- Y-Y: radial gerichtete Mittenachse von AU

- a: Anstiegswinkel von 4e
- β: Anstiegswinkel von 4c
- Δp: Druckdifferenz
- µ_{H}: Haftreibungszahl

## Patentansprüche

1. Verbindungssystem für Leitungen, Armaturen oder Aggregate, die zur Führung eines mit einem gegenüber einem Vergleichsdruck (p₂) erhöhten Druck (p₁) beaufschlagten Fluids bestimmt sind, insbesondere für Kohlendioxid führende Systeme, umfassend ein erstes Kupplungsteil (1), wie ein Gehäuseteil, ein entlang einer Achse (X-X) in eine Aufnahmeöffnung (6) des ersten Kupplungsteils (1) mit einem Schaft (5) einsteckbares zweites Kupplungsteil (2), wie ein Steckerteil, und mindestens eine aus einem Elastomer bestehende Umfangsdichtung (3), die in einer Nut (4) angeordnet ist, welche umfangsgemäß in einem der beiden Kupplungsteile (1, 2) ausgebildet ist und einen Nutgrund (4a) sowie zwei Nutflanken (4b, 4c) aufweist, wobei die Umfangsdichtung (3) im Betriebszustand in der Nut (4) eine Position einnimmt, in der die Umfangsdichtung (3) unter Deformation und Erzeugung einer radialen Vorpresskaft (Fᵥ) einen Spalt (7) der Aufnahmeöffnung (6) verschließt und dabei über eine in axialer Richtung (X-X) verlaufende Kontaktlänge (KL) an den Kupplungsteilen (1,2) anliegt,
**dadurch gekennzeichnet, dass** in einem Bereich am Nutgrund (4a) oder in der Nähe des Nutgrundes (4a) in der Nut (4) Mittel (4d, 4e) zur mechanischen Hemmung einer axialen Bewegung der Umfangsdichtung (3) angeordnet sind, die derart ausgeführt sind, dass die Umfangsdichtung (3) - sowohl, wenn das eine Kupplungsteil (2) mit dem Schaft (5) in die Aufnahmeöffnung (6) des anderen Kupplungsteiles (1) eingesteckt wird, als auch bei einer entgegengesetzt wirkenden relativen Rückbewegung der Kupplungsteile (1, 2) zueinander in der Position gehalten ist, in der die Umfangsdichtung (3) im Betriebszustand den Spalt (7) der Aufnahmeöffnung (6) verschließt und dabei mit einer axial gerichteten Anlagefläche (FA) an der in Einsteckrichtung (S) gesehen ersten Nutflanke (4b) anliegt, wobei die Umfangsdichtung (3) im Betriebszustand in asymmetrischer Lage in der Nut (4) angeordnet ist, indem die Umfangsdichtung (3) an der Nutflanke (4b) auf der Seite des abzudichtenden Spaltes (7) anliegt und von der gegenüberliegenden Nutflanke (4c) beabstandet ist (Abstand E), wobei die Mittel (4d, 4e) zur mechanischen Hemmung der axialen Bewegung der Umfangsdichtung (3) eine im Nutgrund (4a) ausgebildete ebene oder gekrümmte, insbesondere konvex gekrümmte, in Richtung (S) des axialen Einsteckens des einen Kupplungsteils (2) in die Aufnahmeöffnung (6) des anderen Kupplungsteiles radial nach außen verlaufende Schrägfläche (4e) umfassen.

2. Verbindungssystem nach Anspruch 1,
**dadurch gekennzeichnet, dass** die Mittel (4d, 4e) zur mechanischen Hemmung der axialen Bewegung der Umfangsdichtung (3) derart ausgebildet sind, dass die Mittel (4a, 4d, 4e, 13) in Richtung des axialen Einsteckens des einen Kupplungsteils (2) in die Aufnahmeöffnung (6) des anderen Kupplungsteiles (1) im Längsschnitt gesehen in radialer Richtung eine sprungartige und/oder stetige Verringerung des Querschnitts (AN) der Nut (4) bewirken.

3. Verbindungssystem nach Anspruch 1 oder 2,
**dadurch gekennzeichnet, dass** die Mittel (4d, 4e) zur mechanischen Hemmung der axialen Bewegung der Umfangsdichtung (3) derart ausgebildet sind, dass die Mittel (4a, 4d, 4e, 13), insbesondere in axialer Richtung, eine Erhöhung der durch die Deformation beim Einstecken und die Erzeugung der radialen Vorpresskaft (Fᵥ) in der Umfangsdichtung (3) vorhandenen Eigenspannungen bewirken.

4. Verbindungssystem nach einem der Ansprüche 1 bis 3,
**dadurch gekennzeichnet, dass** die Mittel (4d, 4e) zur mechanischen Hemmung der axialen Bewegung der Umfangsdichtung (3) eine im Nutgrund (4a) angeordnete umfangsgemäß verlaufende Unstetigkeitsstelle (4d), wie eine Knicklinie oder eine Kante, umfassen.

5. Verbindungssystem nach einem der Ansprüche 1 bis 4,
**dadurch gekennzeichnet, dass** die Mittel (4d, 4e) zur mechanischen Hemmung der axialen Bewegung der Umfangsdichtung (3) eine in radialer Richtung vom Nutgrund (4a) ausgehende, insbesondere durch eine konvexe Wölbung gebildete, Stufe umfassen.

6. Verbindungssystem nach Anspruch 5,
**dadurch gekennzeichnet, dass** die vom Nutgrund (4a) ausgehende Stufe eine Höhe (HS) aufweist, die etwa einem Fünftel bis einem Drittel einer maximalen Nuttiefe (T) oder einer maximalen radialen Hauptabmessung (2*R_{SO}, 2*HB) des Querschnitts (AU, AUₒₚₜ) der Umfangsdichtung (3) im unverpressten Zustand entspricht.

7. Verbindungssystem nach Anspruch 5 oder 6,
**dadurch gekennzeichnet, dass** die vom Nutgrund (4a) ausgehende Stufe eine Länge (LS) aufweist, die etwa einem Fünftel bis einem Viertel einer maximalen axialen Hauptabmessung (GL, 2*HA) des Querschnitts (AU, AUₒₚₜ) der Umfangsdichtung (3) im unverpressten Zustand entspricht

8. Verbindungssystem nach einem der Ansprüche 1 bis 7,
**dadurch gekennzeichnet, dass** die Umfangsdichtung (3) eine Querschnittsform aufweist, die derart ausgebildet ist, dass sich der Querschnitt (Aᵥ) der Umfangsdichtung (3) im bestimmungsgemäßen Einbauzustand der Umfangsdichtung (3) in Richtung (S) des axialen Einsteckens des einen Kupplungsteils (2) in die Aufnahmeöffnung (6) des anderen Kupplungsteiles (1) im Längsschnitt gesehen in radialer Richtung zumindest abschnittsweise verringert.

9. Verbindungssystem nach dem Oberbegriff des Anspruchs 1
**dadurch gekennzeichnet, dass** in einem Bereich am Nutgrund (4a) oder in der Nähe des Nutgrundes (4a) in der Nut (4) Mittel (13) zur mechanischen Hemmung einer axialen Bewegung der Umfangsdichtung (3) angeordnet sind, die derart ausgeführt sind, dass die Umfangsdichtung (3) - sowohl, wenn das eine Kupplungsteil (2) mit dem Schaft (5) in die Aufnahmeöffnung (6) des anderen Kupplungsteiles (1) eingesteckt wird, als auch bei einer entgegengesetzt wirkenden relativen Rückbewegung der Kupplungsteile (1, 2) zueinander in der Position gehalten ist, in der die Umfangsdichtung (3) im Betriebszustand den Spalt (7) der Aufnahmeöffnung (6) verschließt und dabei mit einer axial gerichteten Anlagefläche (FA) an der in Einsteckrichtung (S) gesehen ersten Nutflanke (4b) anliegt und die einen Stützring (13) mit höherer Festigkeit als die der Umfangsdichtung (3) umfassen, der auf der zur in Einsteckrichtung (S) gesehen zweiten Nutflanke (4c) weisenden Seite der Umfangsdichtung (3) angeordnet ist.

10. Verbindungssystem nach Anspruch 9,
**dadurch gekennzeichnet, dass** der Stützring (13) an die Umfangsdichtung (3) anvulkanisiert ist.

11. Verbindungssystem nach einem der Ansprüche 1 bis 10,
**dadurch gekenntzeichnet,** dass der Querschnitt (AU, AUₒₚₜ) der unverpressten Umfangsdichtung (3), eine Nuttiefe (T) und eine Nutlänge (NL) der Nut (4) sowie eine Spaltweite (s) des Spaltes (7) derart aufeinander abgestimmt sind, dass in einem, eine Permeation durch die Umfangsdichtung (3) bestimmenden Verhältnis (A_{E}/KL) einer permeationswirksamen Teilumfangsfläche (A_{E}) der Umfangsdichtung (3) zu der Kontaktlänge (KL) die Teilumfangsfläche (A_{E}) nicht größer ist als der halbe Wert, vorzugsweise nicht größer ist als ein Fünftel des Wertes, einer senkrecht zur axialen Richtung (X-X) verlaufenden Querschnittsfläche (Aᵥ) der deformierten Umfangsdichtung (3).

12. Verbindungssystem nach Anspruch 11,
**dadurch gekennzeichnet, dass** die Teilumfangsfläche (A_{E}) in der Nähe des Spaltes (7) angeordnet und durch eine Bogenlinie (BL) einer verpressten, radialen Querschnittsfläche (A_{R}) der deformierten Umfangsdichtung (3) bestimmt ist.

13. Verbindungssystem nach Anspruch 12,
**dadurch gekennzeichnet, dass** eine Länge der Bogenlinie (BL) bei verschwindender Bogenkrümmung minimal den Wert der Spaltweite (s) annimmt und maximal nicht größer ist als der halbe Wert, vorzugsweise ein Viertel des Wertes der Summe aus Spaltweite (s) und Nuttiefe (T).

14. Verbindungssystem nach einem der Ansprüche 1 bis 13,
**gekennzeichnet durch** ein vorzugsweise am ersten Kupplungsteil (1) befestigtes, insbesondere metallisches Element (200), welches unter Berücksichtigung seiner Wärmeausdehnung sowie der Wärmeausdehnung der Kupplungsteile (1, 2) den Wert der Spaltweite (s) des abzudichtenden Spaltes (7) bei gegenüber der Raumtemperatur erhöhter Temperatur verringert.

15. Verbindungssystem nach einem der Ansprüche 1 bis 14,
**dadurch gekennzeichnet, dass** der Querschnitt (AU, AUₒₚₜ, AUₛᵤₚ) der Umfangsdichtung (3) im unverpressten Zustand eine Vorform aufweist, bei der ein Quotient (FZ_{U}) aus einer axialen Haupterstreckung (HA) und einer radialen Haupterstreckung (HB) des Dichtungsquerschnitts einen Wert von größer 1, vorzugsweise von größer 2, aufweist.

16. Verbindungssystem nach einem der Ansprüche 1 bis 15,
**dadurch gekennzeichnet, dass** der Querschnitt der Umfangsdichtung (3) im unverpressten Zustand eine Vorform aufweist, bei der ein Quotient (FZ_{U}) aus einer axialen Haupterstreckung (HA) und einer radialen Haupterstreckung (HB) des Dichtungsquerschnitts einen Wert von kleiner 1, vorzugsweise von kleiner 0,5, aufweist.

17. Verbindungssystem nach einem der Ansprüche 1 bis 16,
**dadurch gekennzeichnet, dass** der Querschnitt (AUₒₚₜ) der unverpressten Umfangsdichtung (3) in der Grundgestalt aus einem Rechteck besteht, das zwei mit einem ersten Krümmungsradius (R₁) konvex gewölbte Längsseiten, zwei mit einem zweiten Krümmungsradius (R₂) konvex gewölbte Querseiten und vier mit einem dritten Krümmungsradius (R₃) konvex verrundete Ecken aufweist.

18. Verbindungssystem nach Anspruch 17,
**dadurch gekennzeichnet, dass** der dritte Krümmungsradius (R₃) kleiner ist als der erste Krümmungsradius (R₁), wobei der erste Krümmungsradius (R₁) kleiner ist als der zweite Krümmungsradius (R₂) oder - wenn ein/der Quotient (FZ_{U}) aus einer/der axialen Haupterstreckung (HA) und einer/der radialen Haupterstreckung (HB) des Dichtungsquerschnitts einen Wert von größer 2 aufweist - der erste Krümmungsradius (R₁) größer ist als der zweite Krümmungsradius (R₂).

19. Verbindungssystem nach einem der Ansprüche 1 bis 18,
**dadurch gekennzeichnet, dass** der Querschnitt (AUₛᵤₚ) im unverpressten Zustand der ringförmigen Umfangsdichtung (3) in der Grundgestalt ein Rechteck ist, welches tonnenartig radial nach außen gewölbt ist.

20. Verbindungssystem nach Anspruch 19,
**dadurch gekennzeichnet, dass** der Querschnitt (AUₛᵤₚ) einen ersten Krümmungsradius (R₁) für eine radial äußere, konvex gewölbte Längsseite und einen zweiten Krümmungsradius (R₄) für eine radial innere, konkav gewölbte Längsseite aufweist.

21. Verbindungssystem nach Anspruch 19 oder 20,
**dadurch gekennzeichnet, dass** der erste Krümmungsradius (R₁) für die äußere, konvex gewölbte Längsseite größer ist als der zweite Krümmungsradius (R₄) für die innere, konkav gewölbte Längsseite.

22. Verbindungssystem nach einem der Ansprüche 19 bis 21,
**dadurch gekennzeichnet, dass** der Querschnitt (AUₛᵤₚ) Querseiten mit ebenem, ungewölbten Verlauf aufweist.

23. Verbindungssystem nach einem der Ansprüche 19 bis 22,
**dadurch gekennzeichnet, dass** der Querschnitt (AUₛᵤₚ) mit einem dritten Krümmungsradius (R₃) konvex verrundete Ecken aufweist.

24. Verbindungssystem nach Anspruch 23,
**dadurch gekennzeichnet, dass** der dritte Krümmungsradius (R₃) kleiner als der erste Krümmungsradius (R₁) der konvexen Längsseite und kleiner als der zweite Krümmungsradius (R₄) der konkaven Längsseite des Querschnitts (AUₛᵤₚ) ist.

25. Verbindungssystem nach einem der Ansprüche 1 bis 24,
**dadurch gekennzeichnet, dass** ein Wert der Menge (Q) des infolge von Permeation durch die Umfangsdichtung (3) durchgesetzten Fluids nicht größer ist als etwa 2,5 g pro Jahr und Verbindung, vorzugsweise nicht größer als 1 g pro Jahr und Verbindung, besonders bevorzugt nicht größer als 0,5 g pro Jahr und Verbindung.

## Claims

1. A connecting system for conduits, fittings or assemblies, which are intended for guiding a fluid acted upon by a pressure (p₁) which is elevated as compared with a reference pressure (p₂), in particular for systems guiding carbon dioxide, comprising a first coupling part (1), such as a housing part, a second coupling part (2), such as a connector part, insertable along an axis (X-X) into a receiving opening (6) of the first coupling part (1) by means of a shaft (5), and at least one peripheral seal (3), consisting of an elastomer, arranged in a groove (4) which is formed circumferentially in one of the two coupling parts (1, 2) and which has a groove base (4a) as well as two groove flanks (4b, 4c), wherein in the operational state, the peripheral seal (3) occupies in the groove (4) a position in which the peripheral seal (3) closes a gap (7) of the receiving opening (6) accompanied by deformation and production of a radial pre-pressing force (Fᵥ) and in the process contacts the coupling parts (1, 2) over a contact length (KL) running in an axial direction (X-X), **characterised in that** means (4d, 4e) to mechanically arrest an axial motion of the peripheral seal (3) are arranged in the groove (4) in a region at the groove base (4a) or in the vicinity of the groove base (4a) and are constructed in such a manner that - both when one coupling part (2) is inserted into the receiving opening (6) of the other coupling part (1) by means of the shaft (5) and in the event of an opposite-acting relative backward motion of the coupling parts (1, 2) in relation to one another - the peripheral seal (3) is held in the position in which it closes, in the operational state, the gap (7) of the receiving opening (6) and in the process contacts the first groove flank (4b), viewed in the insertion direction (S), with an axially directed contact surface (FA), wherein in the operational state, the peripheral seal (3) is arranged in the groove (4) in an asymmetrical position **in that** the peripheral seal (3) contacts the groove flank (4b) on the side of the gap (7) to be sealed and is at a distance from the opposite groove flank (4c) (distance E), wherein the means (4d, 4e) to mechanically arrest the axial motion of the peripheral seal (3) comprise an inclined surface (4e), formed in the groove base (4a) and plane or curved, in particular convexly curved, which runs radially outwards into the receiving opening (6) of one coupling part in the direction (S) of the axial insertion of the other coupling part (2).

2. A connecting system according to claim 1, **characterised in that** the means (4d, 4e) to mechanically arrest the axial motion of the peripheral seal (3) are constructed in such a manner that the means (4a, 4d, 4e, 13) effect in the direction of the axial insertion of one coupling part (2) into the receiving opening (6) of the other coupling part (1) viewed in longitudinal section, a sudden and/or steady reduction in the cross-section (AN) of the groove (4) in a radial direction.

3. A connecting system according to claim 1 or 2, **characterised in that** the means (4d, 4e) to mechanically arrest the axial motion of the peripheral seal (3) are constructed in such a manner that the means (4a, 4d, 4e, 13), effect, in particular in an axial direction, an increase in the internal stresses present in the peripheral seal (3) through the deformation upon insertion and the production of the radial pre-pressing force (Fᵥ).

4. A connecting system according to any one of claims 1 to 3, **characterised in that** the means (4d, 4e) to mechanically arrest the axial motion of the peripheral seal (3) comprise a point of discontinuity (4d), such as a bend line or an edge, arranged in the groove base (4a) and running circumferentially.

5. A connecting system according to any one of claims 1 to 4, **characterised in that** the means (4d, 4e) to mechanically arrest the axial motion of the peripheral seal (3) comprise a step which starts from the groove base (4a) in a radial direction and which is in particular formed by a convex curve.

6. A connecting system according to claim 5, **characterised in that** the step starting from the groove base (4a) has a height (HS) substantially corresponding to a fifth to a third of a maximum groove depth (T) or a maximum radial main dimension (2*R_{SO}, 2*HB) of the cross-section (AU, AUₒₚₜ) of the peripheral seal (3) in the uncompressed state.

7. A connecting system according to claim 5 or 6, **characterised in that** the step starting from the groove base (4a) has a length (LS) substantially corresponding to a fifth to a quarter of a maximum axial main dimension (GL, 2*HA) of the cross-section (AU, AUₒₚₜ) of the peripheral seal (3) in the uncompressed state.

8. A connecting system according to any one of claims 1 to 7, **characterised in that** the peripheral seal (3) has a cross-sectional form formed in such a manner that, in the intended fitted state of the peripheral seal (3), at least portions of the cross-section (Aᵥ) of the peripheral seal (3) reduce in a radial direction in the direction (S) of the axial insertion of one coupling part (2) into the receiving opening (6) of the other coupling part (1) viewed in the longitudinal direction.

9. A connecting system according to the preamble of claim 1, **characterised in that** means (13) to mechanically arrest an axial motion of the circumferential seal (3) are arranged in the groove (4) in a region at the groove base (4a) or in the vicinity of the groove base (4a) and are constructed in such a manner that - both when one coupling part (2) is inserted into the receiving opening (6) of the other coupling part (1) by means of the shaft (5) and in the event of an opposite-acting relative backward motion of the coupling parts (1, 2) in relation to one another - the peripheral seal (3) is held in the position in which it closes, in the operational state, the gap (7) of the receiving opening (6) and in the process contacts the first groove flank (4b), viewed in the insertion direction (S), with an axially directed contact surface (FA), and the means (13) comprise a support ring (13) of greater strength than the peripheral seal (3), which support ring (13) is arranged on the side of the peripheral seal (3) directed towards the second groove flank (4c) viewed in the insertion direction (S).

10. A connecting system according to claim 9, **characterised in that** the support ring (13) is vulcanised to the peripheral seal (3).

11. A connecting system according to any one of claims 1 to 10, **characterised in that** the cross-section (AU, AUₒₚₜ) of the uncompressed peripheral seal (3), a groove depth (T) and a groove length (NL) of the groove (4) as well as a gap width (s) of the gap (7) are matched to one another in such a manner that in a ratio (A_{E}/KL), determining permeation through the peripheral seal (3), of a permeation-active partial circumferential area (A_{E}) of the peripheral seal (3) to the contact length (KL), the partial circumferential area (A_{E}) is not greater than half the value, preferably not greater than a fifth of the value, of a cross-sectional area (Aᵥ), running perpendicular to the axial direction (X-X), of the deformed peripheral seal (3).

12. A connecting system according to claim 11, **characterised in that** the partial circumferential area (A_{E}) is arranged in the vicinity of the gap (7) and is determined by a curved line (BL) of a compressed, radial cross-sectional area (A_{R}) of the deformed peripheral seal (3).

13. A connecting system according to claim 12, **characterised in that** a length of the curved line (BL) takes, with disappearing arc curvature, at the minimum the value of the gap width (s) and is at the maximum not greater than half the value, preferably a quarter of the value, of the sum of gap width (s) and groove depth (T).

14. A connecting system according to any one of claims 1 to 13, **characterised by** an element (200), in particular of metal and preferably secured to the first coupling part (1), which having regard to its thermal expansion and the thermal expansion of the coupling parts (1, 2) reduces, at a temperature higher than the room temperature, the value of the gap width (s) of the gap (7) to be sealed.

15. A connecting system according to any one of claims 1 to 14, **characterised in that** the cross-section (AU, AUₒₚₜ, AUₛᵤₚ) of the peripheral seal (3) in the uncompressed state has an initial shape with which a quotient (FZᵤ) of an axial main extension (HA) and a radial main extension (HB) of the seal cross-section has a value greater than 1, preferably greater than 2.

16. A connecting system according to any one of claims 1 to 15, **characterised in that** the cross-section of the peripheral seal (3) in the uncompressed state has an initial shape with which a quotient (FZᵤ) of an axial main extension (HA) and a radial main extension (HB) of the seal cross-section has a value smaller than 1, preferably smaller than 0.5.

17. A connecting system according to any one of claims 1 to 16, **characterised in that** the cross-section (AUₒₚₜ) of the uncompressed peripheral seal (3) comprises, in the original shape, of a rectangle having two long sides convexly curved with a first radius of curvature (R₁), two short sides convexly curved with a second radius of curvature (R₂) and four corners convexly rounded with a third radius of curvature (R₃).

18. A connecting system according to claim 17, **characterised in that** the third radius of curvature (R₃) is smaller than the first radius of curvature (R₁), wherein the first radius of curvature (R₁) is smaller than the second radius of curvature ((R₂) or- when a/the quotient (FZᵤ) of a/the axial main extension (HA) and a/the radial main extension (HB) of the seal cross-section has a value greater than 2 - the first radius of curvature (R₁) is greater than the second radius of curvature (R₂).

19. A connecting system according to any one of claims 1 to 18, **characterised in that** the cross-section (AUₛᵤₚ) in the uncompressed state of the annular peripheral seal (3) is in the original shape a rectangle which is curved radially outwards in the manner of a barrel.

20. A connecting system according to claim 19, **characterised in that** the cross-section (AUₛᵤₚ) has a first radius of curvature (R₁) for a radially outer, convexly curved long side and a second radius of curvature (R₄) for a radially inner, concavely curved long side.

21. A connecting system according to claim 19 or 20, **characterised in that** the first radius of curvature (R₁) for the outer, convexly curved long side is greater than the second radius of curvature (R₄) for the inner, concavely curved long side.

22. A connecting system according to any one of claims 19 to 21, **characterised in that** the cross-section (AUₛᵤₚ) has short sides with a plane, uncurved course.

23. A connecting system according to any one of claims 19 to 22, **characterised in that** the cross-section (AUₛᵤₚ) has corners convexly rounded with a third radius of curvature (R₃).

24. A connecting system according to claim 23, **characterised in that** the third radius of curvature (R₃) is smaller than the first radius of curvature (R₁) of the convex long side and is smaller than the second radius of curvature (R₄) of the concave long side of the cross-section (AUₛᵤₚ).

25. A connecting system according to any one of claims 1 to 24, **characterised in that** a value of the quantity (Q) of the fluid passed through the peripheral seal (3) as a result of permeation is not greater than approximately 2.5 g per year and connection, preferably not greater than 1 g per year and connection, particularly preferably not greater than 0.5 g per year and connection.

## Revendications

1. Système de raccord pour des conduites, éléments de robinetterie ou groupes d'organes qui sont destinés à guider un fluide sollicité par une pression (p₁) élevée par rapport à une pression de référence (p₂), en particulier des systèmes parcourus par du dioxyde de carbone, comportant une première partie de couplage (1), telle qu'un boîtier, une deuxième partie de couplage (2), telle qu'un élément à fiche, apte à être enfichée avec une tige (5) le long d'un axe (X-X) dans une ouverture de réception (6) de la première partie de couplage (1), et au moins une garniture d'étanchéité périphérique (3), qui est réalisée en élastomère et qui est posée dans une gorge (4), qui est ménagée sur le pourtour dans l'une des deux parties de couplage (1, 2) et qui comporte un fond (4a), ainsi que deux flancs (4b, 4c), dans lequel la garniture d'étanchéité périphérique (3) prend, en position de service dans la gorge (4), une position dans laquelle la garniture d'étanchéité périphérique (3) obture une fente (7) de l'ouverture de réception (6), moyennant une déformation et la production d'une force de pression initiale (Fᵥ) radiale, et, en l'occurrence, est en appui contre les parties de couplage (1, 2) sur une longueur de contact (KL) orientée dans la direction axiale (X-X),
**caractérisé en ce que** dans une zone sur le fond de gorge (4a) ou à proximité du fond de gorge (4a) sont agencés, dans la gorge (4), des moyens (4d, 4e), qui sont destinés à empêcher mécaniquement un mouvement axial de la garniture d'étanchéité périphérique (3) et qui sont configurés de telle sorte que - lorsque la partie de couplage (2) est enfichée avec la tige (5) dans l'ouverture de réception (6) de l'autre partie de couplage (1), de même que lorsque les parties de couplage (1, 2) effectuent l'une par rapport à l'autre un mouvement de recul relatif agissant dans le sens opposé - la garniture d'étanchéité périphérique (3) est maintenue dans la position dans laquelle la garniture d'étanchéité périphérique (3) obture, en position de service, la fente (7) de l'ouverture de réception (6) et, en l'occurrence, est en appui avec une surface d'appui (FA), orientée axialement, contre le premier flanc de gorge (4b) par référence au sens d'introduction (S), dans lequel la garniture d'étanchéité périphérique (3) est disposée, en position de service, dans une position asymétrique dans la gorge (4), du fait que la garniture d'étanchéité périphérique (3) est en appui contre le flanc de gorge (4b) sur le côté de la fente (7) à étancher et est écartée (distance E) du flanc de gorge (4c) opposé, dans lequel les moyens (4d, 4e), destinés à empêcher mécaniquement un mouvement axial de la garniture d'étanchéité périphérique (3), comportent une surface inclinée (4e), réalisée dans le fond de gorge (4a) sous forme plane ou courbe, en particulier avec une courbure convexe, et s'étendant radialement vers l'extérieur dans le sens (S) de l'introduction axiale de la partie de couplage (2) dans l'ouverture de réception (6) de l'autre partie de couplage.

2. Système de raccord selon la revendication 1, **caractérisé en ce que** les moyens (4d, 4e), destinés à empêcher mécaniquement le mouvement axial de la garniture d'étanchéité périphérique (3), sont configurés de telle sorte que les moyens (4a, 4d, 4e, 13) induisent, dans le sens de l'introduction axiale de la partie de couplage (2) dans l'ouverture de réception (6) de l'autre partie de couplage (1), une diminution brusque et/ou continue de la section (A_{N}) de la gorge (4) dans la direction radiale par référence à la coupe longitudinale.

3. Système de raccord selon la revendication 1 ou 2, **caractérisé en ce que** les moyens (4d, 4e), destinés à empêcher mécaniquement le mouvement axial de la garniture d'étanchéité périphérique (3), sont configurés de telle sorte que les moyens (4a, 4d, 4e, 13) induisent, en particulier dans la direction axiale, une augmentation des tensions internes dues à la déformation au moment de l'enfichage et à la production de la force de pression initiale (Fᵥ) radiale dans la garniture d'étanchéité périphérique (3).

4. Système de raccord selon l'une quelconque des revendications 1 à 3, **caractérisé en ce que** les moyens (4d, 4e), destinés à empêcher mécaniquement le mouvement axial de la garniture d'étanchéité périphérique (3), comportent un emplacement discontinu (4d), tel qu'une ligne d'inflexion ou une arête, qui s'étend dans la direction circonférentielle et est agencé dans le fond de gorge (4a).

5. Système de raccord selon l'une quelconque des revendications 1 à 4, **caractérisé en ce que** les moyens (4d, 4e), destinés à empêcher mécaniquement le mouvement axial de la garniture d'étanchéité périphérique (3), comportent un décrochement formé en particulier par une courbure convexe, partant du fond de gorge (4a) dans la direction radiale.

6. Système de raccord selon la revendication 5, **caractérisé en ce que** le décrochement partant du fond de gorge (4a) a une hauteur (HS), qui correspond sensiblement à un cinquième jusqu'à un tiers d'une profondeur maximale (T) de la gorge ou à une dimension principale radiale maximale (2*Rₛₒ, 2*HB) de la section (AU, AUₒₚₜ) de la garniture d'étanchéité périphérique (3) à l'état non comprimé.

7. Système de raccord selon la revendication 5 ou 6, **caractérisé en ce que** le décrochement partant du fond de gorge (4a) a une longueur (LS) qui correspond sensiblement à un cinquième jusqu'à un quart d'une dimension principale axiale maximale (GL, 2*HA) de la section (AU, AUₒₚₜ) de la garniture d'étanchéité périphérique (3) à l'état non comprimé.

8. Système de raccord selon l'une quelconque des revendications 1 à 7, **caractérisé en ce que** la garniture d'étanchéité périphérique (3) possède une forme de section qui est configurée de telle sorte que la section (Aᵥ) de la garniture d'étanchéité périphérique (3), dans la position montée de la garniture d'étanchéité périphérique (3) conformément à sa destination, diminue au moins par zones dans la direction radiale, par référence à une coupe longitudinale, dans le sens (S) de l'introduction axiale de la partie de couplage (2) dans l'ouverture de réception (6) de l'autre partie de couplage (1).

9. Système de raccord selon le préambule de la revendication 1, **caractérisé en ce que** dans une zone sur le fond de gorge (4a) ou à proximité du fond de gorge (4a) sont agencés, dans la gorge (4), des moyens (13) destinés à empêcher mécaniquement un mouvement axial de la garniture d'étanchéité périphérique (3), lesquels sont configurés de telle sorte que - lorsque la partie de couplage (2) est enfichée avec la tige (5) dans l'ouverture de réception (6) de l'autre partie de couplage (1), de même que lorsque les parties de couplage (1, 2) effectuent l'une par rapport à l'autre un mouvement de recul relatif agissant dans le sens opposé - la garniture d'étanchéité périphérique (3) est maintenue dans la position dans laquelle la garniture d'étanchéité périphérique (3) obture, en position de service, la fente (7) de l'ouverture de réception (6) et, en l'occurrence, est en appui avec une surface d'appui (FA), orientée axialement, contre le premier flanc de gorge (4b) par référence au sens d'introduction (S), et lesquels comportent une bague d'appui (13), qui possède une résistance plus élevée que celle de la garniture d'étanchéité périphérique (3) et qui est posée sur le côté de la garniture d'étanchéité périphérique (3), orienté vers le deuxième flanc de gorge (4c) par référence au sens d'introduction (S).

10. Système de raccord selon la revendication 9, **caractérisé en ce que** la bague d'appui (13) est attachée par vulcanisation à la garniture d'étanchéité périphérique (3).

11. Système de raccord selon l'une quelconque des revendications 1 à 10, **caractérisé en ce que** la section (AU, AUₒₚₜ) de la garniture d'étanchéité périphérique (3) non comprimée, une profondeur (T) et une longueur (NL) de la gorge (4), ainsi qu'une largeur (s) de la fente (7) sont ajustées entre elles de telle sorte que dans un rapport (A_{E}/KL), déterminant une perméation à travers la garniture d'étanchéité périphérique (3), d'une portion périphérique (A_{E}), active pour la perméation, de la garniture d'étanchéité périphérique (3) par rapport à la longueur de contact (KL), la portion périphérique (A_{E}) n'est pas supérieure à la moitié de la valeur, de préférence n'est pas supérieure à un cinquième de la valeur d'une surface de section (Aᵥ), orientée perpendiculairement à la direction axiale (X-X), de la garniture d'étanchéité périphérique (3) déformée.

12. Système de raccord selon la revendication 11, **caractérisé en ce que** la portion périphérique (A_{E}) est disposée à proximité de la fente (7) et est définie par une ligne courbe (BL) d'une surface de section (A_{R}) radiale comprimée de la garniture d'étanchéité périphérique (3) déformée.

13. Système de raccord selon la revendication 12, **caractérisé en ce qu'**une longueur de la ligne courbe (BL) avec une courbure d'arc évanouissante accepte au minimum la valeur de la largeur de fente (s) et au maximum n'est pas supérieure à la moitié de la valeur, de préférence n'est pas supérieure à un quart de la valeur de la somme formée par la largeur de fente (s) et la profondeur de gorge (T).

14. Système de raccord selon l'une quelconque des revendications 1 à 13, **caractérisé par** un élément (200), en particulier métallique, fixé de préférence à la première partie de couplage (1), lequel, en tenant compte de sa dilatation thermique, ainsi que de la dilatation thermique des parties de couplage (1, 2), diminue la valeur de la largeur (s) de la fente (7) à étancher, en présence d'une température plus élevée que la température ambiante.

15. Système de raccord selon l'une quelconque des revendications 1 à 14, **caractérisé en ce que** la section (AU, AUₒₚₜ, AUₛᵤₚ) de la garniture d'étanchéité périphérique (3) à l'état non comprimé présente une forme préalable, dans laquelle un quotient (FZ_{U}), formé par une dimension principale axiale (HA) et une dimension principale radiale (HB) de la section de la garniture d'étanchéité, possède une valeur supérieure à 1, de préférence supérieure à 2.

16. Système de raccord selon l'une quelconque des revendications 1 à 15, **caractérisé en ce que** la section de la garniture d'étanchéité périphérique (3) à l'état non comprimé possède une forme préalable, dans laquelle un quotient (FZ_{U}), formé par une dimension principale axiale (HA) et une dimension principale radiale (HB) de la section de la garniture d'étanchéité, possède une valeur inférieure à 1, de préférence inférieure à 0,5.

17. Système de raccord selon l'une quelconque des revendications 1 à 16, **caractérisé en ce que** la section (AUₒₚₜ) de la garniture d'étanchéité périphérique (3) non comprimée est formée, dans sa forme de base, par un rectangle qui comporte deux côtés longitudinaux à courbure convexe avec un premier rayon de courbure (R₁), deux côtés transversaux à courbure convexe avec un deuxième rayon de courbure (R₂) et quatre angles arrondis sous forme convexe avec un troisième rayon de courbure (R₃).

18. Système de raccord selon la revendication 17, **caractérisé en ce que** le troisième rayon de courbure (R₃) est inférieur au premier rayon de courbure (R₁) ou - si un/le quotient (FZ_{U}), formé par une/la dimension principale axiale (HA) et une/la dimension principale radiale (HB) de la section de la garniture d'étanchéité, a une valeur supérieure à 2 - le premier rayon de courbure (R₁) est supérieur au deuxième rayon de courbure (R₂).

19. Système de raccord selon l'une quelconque des revendications 1 à 18, **caractérisé en ce que** la section (AUₛᵤₚ) à l'état non comprimé de la garniture d'étanchéité périphérique (3) annulaire est, dans sa forme de base, un rectangle qui est bombé radialement vers l'extérieur en forme de tonneau.

20. Système de raccord selon la revendication 19, **caractérisé en ce que** la section (AUₛᵤₚ) possède un premier rayon de courbure (R₁) pour un côté longitudinal radialement extérieur à courbure convexe et un deuxième rayon de courbure (R₄) pour un côté longitudinal radialement intérieur à courbure concave.

21. Système de raccord selon la revendication 19 ou 20, **caractérisé en ce que** le premier rayon de courbure (R₁) pour le côté longitudinal extérieur à courbure convexe est supérieur au deuxième rayon de courbure (R₄) pour le côté longitudinal intérieur à courbure concave.

22. Système de raccord selon l'une quelconque des revendications 19 à 21, **caractérisé en ce que** la section (AUₛᵤₚ) comporte des côtés transversaux avec un tracé plan non courbe.

23. Système de raccord selon l'une quelconque des revendications 19 à 22, **caractérisé en ce que** la section (AUₛᵤₚ) comporte des angles arrondis sous forme convexe avec un troisième rayon de courbure (R₃).

24. Système de raccord selon la revendication 23, **caractérisé en ce que** le troisième rayon de courbure (R₃) est inférieur au premier rayon de courbure (R₁) du côté longitudinal convexe et inférieur au deuxième rayon de courbure (R₄) du côté longitudinal concave de la section (AUₛᵤₚ).

25. Système de raccord selon l'une quelconque des revendications 1 à 24, **caractérisé en ce qu'**une valeur (Q) de la quantité de fluide, traversant la garniture d'étanchéité périphérique (3) sous l'effet de la perméation, n'est pas supérieure à environ 2,5 g par an et par raccord, de préférence n'est pas supérieure à 1 g par an et par raccord, en particulier, de préférence, n'est pas supérieure à 0,5 g par an et par raccord.
